# EUROPEAN PATENT APPLICATION

(11) **EP 2 621 219 A1**
(43) Date of publication of application: **31.07.2013**
(21) Application number: 10857538.2
(22) Date of filing: 22.09.2010
(51) Int. Cl.: H04W 40/02, H04W 40/22, H04W 84/22, H04W 92/20

(54) **TRANSFER CONTROL DEVICE, COMMUNICATION SYSTEM AND TRANSFER CONTROL METHOD**

(71) Applicant: Fujitsu Limited, Kawasaki-shi, Kanagawa 211-8588 (JP)
(72) Inventor: NAKATSUGAWA, Keiichi, Kawasaki-shi Kanagawa 211-8588 (JP)
(74) Representative: Stebbing, Timothy Charles
(86) International application number: PCT/JP2010/066451
(87) International publication number: WO 2012/039044

(57) **Abstract**

A network (100) is built by interconnecting wireless communication devices (101) to (103) through wireless connections. A transfer controller (110) acquires bandwidth for each wireless connection. The transfer controller (110) also acquires the volume of traffic transferred through the network (100). The transfer controller (110) controls transfer paths for the traffic, based on the acquired bandwidth and the acquired volume of the traffic, thereby improving the reliability of the network (100).

## Description

### TECHNICAL FIELD

The present invention relates to a transfer controller, a communication system, and a transfer control method.

### BACKGROUND ART

A mobile communications carrier builds a communication system by connecting communication devices, such as base stations and gateway devices, through a network and thereby provides mobile communications services. Such a network used for connection through a system built by a mobile carrier is referred to as mobile backhaul. A line used in the mobile backhaul is, for example, a wired communication line for leased line services, etc., provided by a telecommunications operator.

To prevent communication cutoff with the occurrence of failures, such as line breakage and transmitter/receiver failures, a redundant network, such as ring-type network, is employed as a line in the mobile backhaul. Protection methods for the ring-type network includes a unidirectional path switched ring (UPSR) and bidirectional line switched ring (BLSR).

Charges for use of leased line services provided by a telecommunications operator are high. In countries and regions without sufficient wired communication lines, such as optical fiber lines, leased line services by telecommunications operators may be unavailable. For this reason, building a wireless communication line connecting wireless communication devices using microwaves and millimeter waves as a line for the mobile backhaul is under investigation.

In a backhaul line using radio waves, wireless communication quality may be affected by weather, etc. and deteriorate because the frequencies of microwaves and millimeter waves are so high, ranging from, for example, several [GHz] to dozens [GHz]. In a wireless network, when wireless communication quality deteriorates, a process of changing the modulation method in use to a robust low-speed modulation method is performed. In a wireless network, therefore, bandwidths may vary dynamically depending on environmental elements, such as weather.

In a wireless network, if weather around a given wireless communication device becomes inclement, bandwidths for wireless connections by wireless communication devices may decrease simultaneously. Thus, in the wireless networks, failures peculiar thereto and different from failures in a wired communication network occur. Wireless networks are disclosed in, for example, Patent documents 1 and 2 shown below.

Patent Document 1: Published Japanese-Translation of PCT Application, Publication No. 2008-520169
Patent Document 2: Published Japanese-Translation of PCT Application, Publication No. 2008-535398

### DISCLOSURE OF INVENTION

### PROBLEM TO BE SOLVED BY THE INVENTION

Use of the above conventional protection methods, however, cannot sufficiently prevent or alleviate a drop in wireless network throughput caused by variations in wireless communication quality and bandwidths in the system. Consequently, a problem arises in that the reliability of the wireless network cannot be improved.

The transfer controller, the communication system, and the transfer control method disclosed herein solve the problems above and aim to improve the reliability of a network.

### MEANS FOR SOLVING PROBLEM

To solve the problems above and achieve an object, the disclosed technology, in a network built by interconnecting wireless communication devices through wireless connections, acquires bandwidth for each wireless connection and the volume of traffic transferred through the network, and based on the acquired bandwidth and the acquired volume of the traffic, controls transfer paths for the traffic.

### EFFECT OF THE INVENTION

The transfer controller, the communication system, and the transfer control method disclosed herein enable network reliability to be improved.

### BRIEF DESCRIPTION OF DRAWINGS

FIG. 1A depicts a communication system according to a first embodiment;
FIG. 1B depicts a transfer controller according to the first embodiment;
FIG. 2 depicts a specific example of a network;
FIG. 3 is a flowchart of an example of a process by a base station on the transmission side of a wireless connection;
FIG. 4 is a flowchart of an example of a process by a base station on the reception side of the wireless connection;
FIG. 5 is a flowchart of an example of a process by the transfer controller;
FIG. 6 is a flowchart of a transfer path selecting process;
FIG. 7 depicts an example of bandwidths for wireless connections in the network depicted in FIG. 2;
FIG. 8 depicts an example of the volume of traffic of each base station in the network of FIG. 2;
FIGs. 9 and 10 depict an example of transfer paths for traffic in the network of FIG. 2;
FIG. 11 depicts the potential of wireless connection transfer by each transfer paths depicted in FIGs. 9 and 10;
FIG. 12 depicts a state change 1 of the network;
FIG. 13 depicts an example of the potential of transfer through each wireless connection in the network of FIG. 12;
FIGs. 14 and 15 depict an example of transfer paths for traffic in the network of FIG. 12;
FIG. 16 depicts the potential of transfer at each wireless connection through the transfer paths of FIGs. 14 and 15;
FIG. 17 depicts a state change 2 of the network;
FIG. 18 depicts an example of the potential of transfer through each wireless connection in the network of FIG. 17;
FIGs. 19 and 20 depict an example of transfer paths for traffic in the network of FIG. 17;
FIG. 21 depicts the potential of transfer at each wireless connection through the transfer paths of FIGs. 19 and 20;
FIG. 22 is a flowchart of an example of a process by the transfer controller of a second embodiment;
FIG. 23 is a flowchart of a transfer path selecting process according to the second embodiment;
FIG. 24 depicts an example of the potential of transfer through each wireless connection resulting from a state change 3 of the network;
FIGs. 25 and 26 depict an example of transmission power change;
FIG. 27 depicts an example of the volume of each stream of traffic that has changed because of a transmission power change;
FIG. 28 depicts an example of the potential of transfer of the traffic volumes indicated in FIG. 27, through each wireless connection;
FIG. 29 is a flowchart of an example 1 of a process of determining the transmission power of a base station;
FIG. 30 is a flowchart of an example 2 of the process of determining the transmission power of the base station;
FIG. 31 is a flowchart of an example 3 of the process of determining the transmission power of the base station;
FIG. 32 is a flowchart of an example 4 of the process of determining the transmission power of the base station;
FIG. 33 depicts a configuration example 1 of the wireless communication device and the transfer controller;
FIG. 34 depicts a configuration example 2 of the wireless communication device and the transfer controller;
FIG. 35 depicts a configuration example 3 of the wireless communication device and the transfer controller;
FIG. 36 depicts a configuration example 4 of the wireless communication device and the transfer controller;
FIG. 37 depicts a configuration example 5 of the wireless communication device and the transfer controller;
FIG. 38 is a flowchart of an example 1 of a transfer path selecting process; and
FIG. 39 is a flowchart of an example 2 of the transfer path selecting process.

### BEST MODE(S) FOR CARRYING OUT THE INVENTION

Preferred embodiments of the disclosed technology are described in detail below with reference to the accompanying drawings.

### (First Embodiment)

### <Communication System>

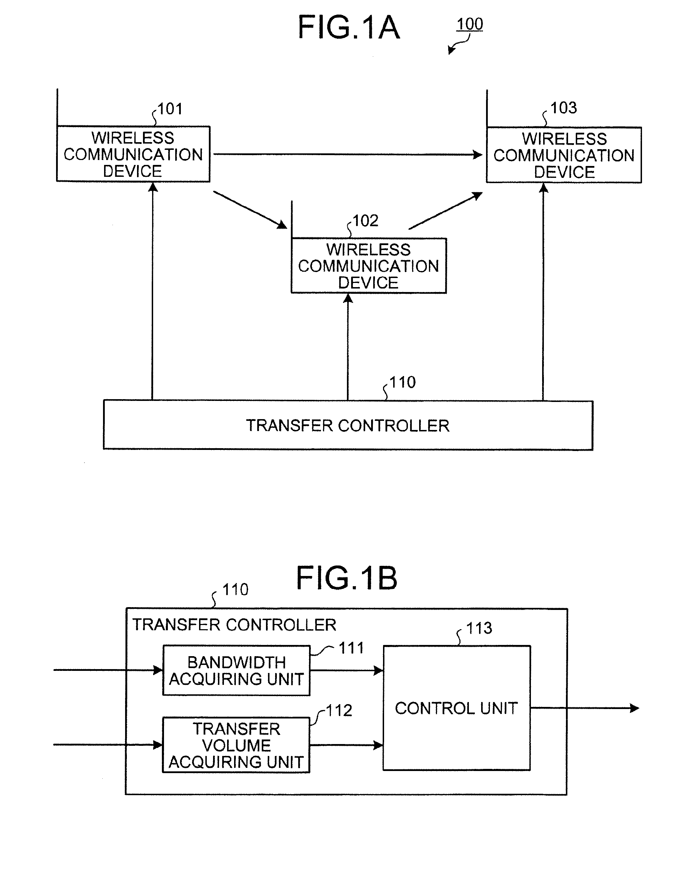

FIG. 1A depicts a communication system according to a first embodiment. As depicted in FIG. 1A, the communication system includes a network 100 and a transfer controller 110. The network 100 is a redundant network made up of wireless connections (wireless links) mutually formed by wireless communication devices 101 to 103. Traffic of the wireless communication devices 101 to 103 are transferred through the network 100.

For example, the wireless communication device 101 forms a wireless connection with the communication device 102 and with the wireless communication device 103. The wireless communication device 102 forms a wireless connection with the communication device 103. For example, a transfer path for traffic transmitted from the wireless communication device 101, which is the sender, to the wireless communication device 103, which is the recipient, is built as two transfer paths (redundant transfer path) including a transfer path passing through the wireless communication device 102 and a transfer path not passing through the wireless communication device 102.

A redundant transfer path for traffic is not limited to multiple transfer paths passing through different wireless communication devices. For example, a redundant transfer path may be built as multiple transfer paths passing through the same wireless communication device, which are multiplexed paths created by frequency or time division multiplexing. For example, in the network 100, the wireless communication devices 101 to 103 may be interconnected linearly through multiplexed wireless connections.

The transfer controller 110 controls transfer paths for traffic in the network 100. For example, the transfer controller 110 selects a transfer path for traffic from the wireless communication device 101 to the wireless communication device 103, among a transfer path passing through the communication device 102 and a transfer path not passing through the communication device 102. The transfer controller 110 then controls at least any one of the wireless communication devices 101 to 103 so that the traffic is transferred through the selected path.

The starting point of traffic in the network 100 is referred to as sender, and the ending point of traffic in the network 100 is referred to as recipient. For example, in transfer of traffic from the wireless communication device 101 to the wireless communication device 103, the wireless communication device 101 serves as a sender and the wireless communication device 103 serves as a recipient.

The transfer controller 110 may be provided independent of the wireless communication devices 101 to 103 or may be incorporated in any one of the wireless communication devices 101 to 103. While a configuration of the network 100 including three wireless communication devices (wireless communication devices 101 to 103) has been described, the network 100 may include four or more wireless communication devices.

While the traffic transferred from the wireless communication device 101 as the sender to the wireless communication device 103 as the recipient has been described, at least either the sender or the recipient may transfer multiple streams of differing traffic through the network 100. In this case, the transfer controller 110 controls each transfer path for the traffic streams.

FIG. 1B depicts the transfer controller according to the first embodiment. As depicted in FIG. 1B, the transfer controller 110, for example, includes a bandwidth acquiring unit 111, a transfer volume acquiring unit 112, and a control unit 113.

The bandwidth acquiring unit 111 acquires bandwidth for each wireless connection established by each of the wireless communication devices 101 to 103. The bandwidth acquiring unit 111 outputs the acquired bandwidth for each wireless connection to the control unit 113. For example, the wireless communication devices 101 to 103 each measure bandwidth for each wireless connection and report the measured bandwidth to the transfer controller 110. The bandwidth for a wireless connection is reported by, for example, transmitting bandwidth information indicating the bandwidth for the wireless connection through the network 100. The bandwidth acquiring unit 111 thus acquires a bandwidth for each wireless connection, reported by the wireless communication devices 101 to 103.

The transfer volume acquiring unit 112 acquires the volume of traffic transferred through the network 100. The transfer volume acquiring unit 112 outputs the acquired traffic volume to the control unit 113. For example, each of the wireless communication devices 101 to 103 measures the volume of traffic that the wireless communication transfers through the network 100, and reports the measured traffic volume to the transfer controller 110. The transfer volume acquiring unit 112 acquires each traffic volume reported by each of the wireless communication devices 101 to 103. the traffic volume is reported by, for example, transmitting traffic information indicative of the traffic volume through the network 100.

When a prescribed communication device through which each stream of traffic transferred by the network 100 passes, is incorporated in the wireless communication devices 101 to 103, the prescribed communication device may measure the volume of each stream of traffic passing through the prescribed communication device. In this case, the prescribed communication device reports a measurement result to the transfer controller 110, enabling the traffic volumes to be acquired efficiently. The transfer controller 110 may be included in the prescribed communication device, thereby eliminating, for example, a need of reporting the traffic volume to the transfer controller 110 using the network 100 and enabling the traffic volumes to be acquired more efficiently.

The control unit 113 controls a transfer path for traffic, based on the bandwidth for each wireless connection, output from the bandwidth acquiring unit 111, and the traffic volume output from the traffic volume acquiring unit 112. For example, the control unit 113 calculates a traffic transfer volume at each wireless connection for each traffic transfer path candidate. The control unit 113 then controls a transfer path for traffic to provide a transfer path in which a bandwidth for each wireless connection and a traffic transfer volume at each wireless connection meet a prescribed condition.

For example, the control unit 113 gives to the wireless communication devices 101 to 103, notification of a determined transfer path for traffic and thereby, controls the transfer path for traffic. When receiving from the transfer controller 110, a transfer path for traffic, the communication devices 101 to 103 each set a transfer destination, etc., to which the received traffic is transferred.

The prescribed condition is, for example, a condition that the traffic transfer volume is less than or equal to a bandwidth at each wireless connection. If this condition is met, the entire traffic can be transferred. The prescribed condition is not limited to this condition and may be set to a variety of conditions. For example, the prescribed condition may be a condition that among the wireless connections, the ratio of wireless connections at which the traffic transfer volume is less than or equal to the bandwidth is greater than or equal to a given ratio. The prescribed condition may be a condition that at each wireless connection, the amount of bandwidth insufficiency with respect to traffic transfer volume is less than or equal to a given value. The prescribed condition may be a condition that the total amount of bandwidth insufficiency with respect to the traffic transfer volumes at the wireless connections is minimized.

### <Specific Example of Network>

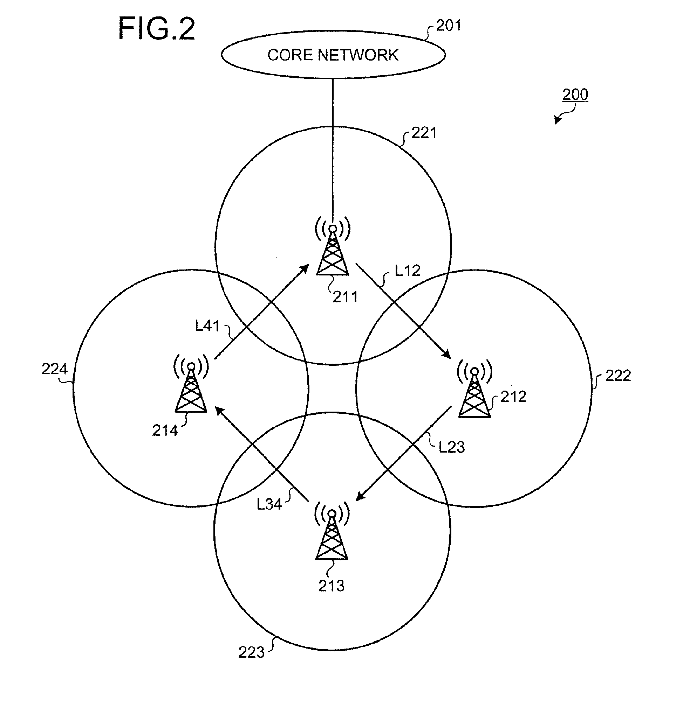

FIG. 2 depicts a specific example of a network. A network 200 depicted in FIG. 2 is a mobile backhaul network. The network 200 includes base stations 211 to 214. The network 200 is a specific example of the network 100 depicted in FIG. 1A. The base stations 211 to 214 are a specific example of the multiple wireless communication devices depicted in FIG. 1A. The base station 211 is connected to a core network 201. The transfer controller 110 depicted in FIG. 1A is included in the base station 211.

Cells 221 to 224 are respective cells of the base stations 211 to 214. The base stations 211 to 214 are situated in the cells 221 to 224 and each transmits to and receives from the core network 201, downlink (DL) traffic and uplink (UP) traffic of each mobile station connected to the base station.

Because the base station 211 is connected to the core network 201, the base station 211 directly transmits to and receives from the core network 201, each stream of traffic of the cell of the base station 211. Each of the base stations 212 to 214 transfers each stream of traffic of the cell of the base station through the network 200 to thereby transmit and receive each stream of traffic with respect to the core network 201.

The base stations 211 to 214 are interconnected through wireless connections in a ring topology configuration. For example, the base station 211 forms a wireless connection with the base station 212 and with the base station 214. The base station 212 forms a wireless connection with the base station 211 and with the base station 213. The base station 213 forms a wireless connection with the base station 212 and with the base station 214. The base station 214 forms a wireless connection with the base station 213 and with the base station 211.

Wireless connection L12 is a wireless connection between the base stations 211 and 212. Wireless connection L23 is a wireless connection between the base stations 212 and 213. Wireless connection L34 is a wireless connection between the base stations 213 and 214. Wireless connection L41 is a wireless connection between the base stations 214 and 211.

The base stations 211 to 214 measure wireless communication qualities of the wireless connections L12, L23, L34, and L41, respectively. The base stations 211 to 214 change respective modulation methods for the wireless connections L12, L23, L34, and L41 based on the measured wireless communication qualities. The base stations 211 to 214, for example, each stores therein correspondence information indicative of the corresponding relation between wireless qualities and modulation methods. The base stations 211 to 214 each select a modulation method corresponding to a measured wireless communication quality from the correspondence information and perform changeover to the selected modulation method.

A modulation method can be changed over to, for example, 256 quadrature amplitude modulation (256 QAM), 128 QMA, 16 QMA, 64 QMA, quadrature phase shift keying (QPSK), etc. In addition to these modulation methods, other various modulation methods may be employed.

The transfer controller 110 included in the base station 211 acquires the volume of each stream of traffic transferred through the network 200. Traffic transferred by the network 200 includes, for example, DL traffic and UL traffic of the base stations 212 to 214 transferred through the network 200. DL traffic and UL traffic each include, for example, user data, control messages, etc., that the base stations 212 to 214 transmit to and receive from mobile stations connected to the base stations 212 to 214.

The transfer controller 110 acquires the volume of each stream of traffic by, for example, monitoring each stream of traffic passing through the base station 211. Because each stream of traffic passes through the base station 211 connected to the core network 201, the volume of each stream of traffic can be acquired efficiently by monitoring the traffic passing through the base station 211.

Further, configuration may be such that a gateway device between the network 200 and the core network 201 monitors traffic and reports a monitoring result to the transfer controller 110. The monitoring of traffic may also be performed in such a way that each of the base stations 211 to 214 monitors traffic of the base station, in which case the base stations 211 to 214 each report a monitoring result to the transfer controller 110.

### <Process by Base Station>

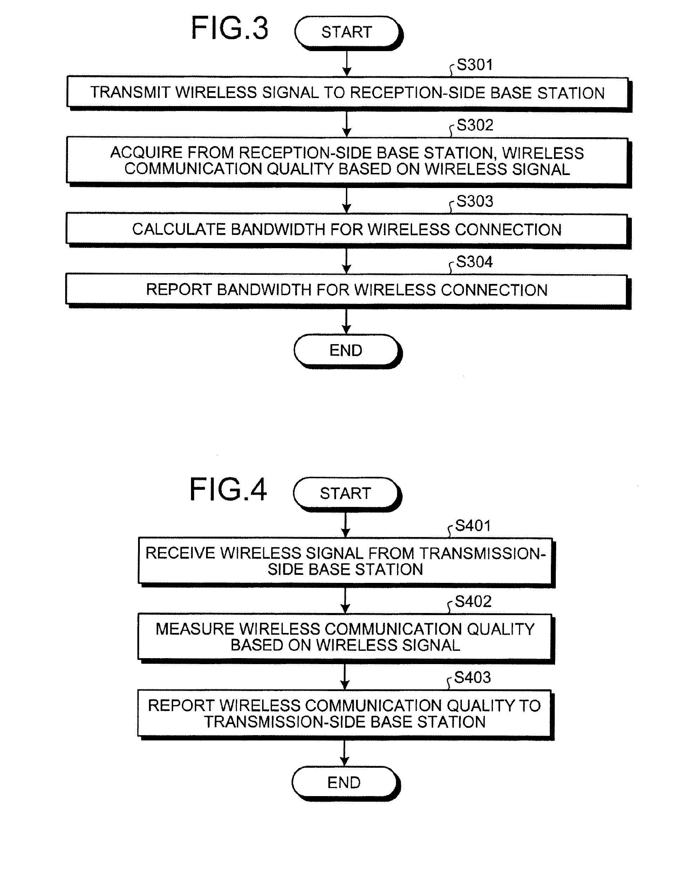

The base stations 211 to 214 measure respective bandwidths for the wireless connections L12, L23, L34, and L41, and report the measured bandwidths to the transfer controller 110 of the base station 211. For example, one of the base stations of a wireless connection subject to measurement serves as a transmission-side base station and the other base station serves as a reception-side base station. The transmission-side base station executes a process depicted in FIG. 3 while the reception-side base station executes a process depicted in FIG. 4. In this manner, the wireless communication quality of the wireless connection is measured.

FIG. 3 is a flowchart of an example of a process by a base station on the transmission side of a wireless connection. The base station on the transmission side of a wireless connection subject to measurement, for example, repeatedly executes the steps depicted in FIG. 3. The transmission-side base station transmits a wireless signal to the reception-side base station (step S301). The transmission-side base station then acquires from the reception-side base station, a wireless communication quality based on the wireless signal transmitted at step S301 (step S302).

Based on the wireless communication quality acquired at step S302, the transmission-side base station calculates a bandwidth for the wireless connection (step S303). For example, the transmission-side base station selects a modulation method for the wireless connection, based on the wireless communication quality. The transmission-side base station then calculates the bandwidth [bps] for the wireless connection, based on the selected modulation method and the number of symbols per second.

For example, the bandwidth for the wireless connection can be calculated as (number of bits per symbol)×(number of symbols per second), which is realized by the selected modulation method. For example, the number of bits per symbol by the selected modulation method is 2 [bits] when the method is QPSK, and is 4 [bits] when the method is 16 QAM. The number of symbols per second is 100000 under a condition of 100 symbols/frame and 1000 frames/second.

The transmission-side base station reports the selected modulation method to the reception-side base station and performs modulation method switching. The transmission-side base station then reports to the transfer controller 110 of the base station 211, the wireless connection bandwidth calculated at step S303 (step S304), and ends the series of operations.

FIG. 4 is a flowchart of an example of a process by a base station on the reception side of the wireless connection. The base station on the reception side of the wireless connection subject to measurement, for example, repeatedly executes the steps depicted in FIG. 4. The reception-side base station receives a wireless signal from the transmission-side base station (step S401). Based on the wireless signal received at step S401, the reception-side base station then measures the wireless communication quality (e.g., SINR) of the wireless connection (step S402). The reception-side base station then reports the wireless communication quality measured at step S402 to the transmission-side base station (step S403), and ends the series of operations.

As a result of execution of the steps depicted in FIGs. 3 and 4 for each wireless connection, the transfer controller 110 of the base station 211 can acquire a bandwidth for each wireless connection. For example, for the wireless connection L12, the base station 211 executes the process of FIG. 3 as the base station 212 executes the process of FIG. 4. For the wireless connection L23, for example, the base station 212 executes the process of FIG. 3 as the base station 213 executes the process of FIG. 4.

For the wireless connection L34, for example, the base station 213 executes the process of FIG. 3 as the base station 214 executes the process of FIG. 4. For the wireless connection L41, for example, the base station 214 executes the process of FIG. 3 as the base station 211 executes the process of FIG. 4. Hence, the base station 211 can acquire respective bandwidths for the wireless connections L12, L23, L34, and L41.

### <Process by Transfer Controller>

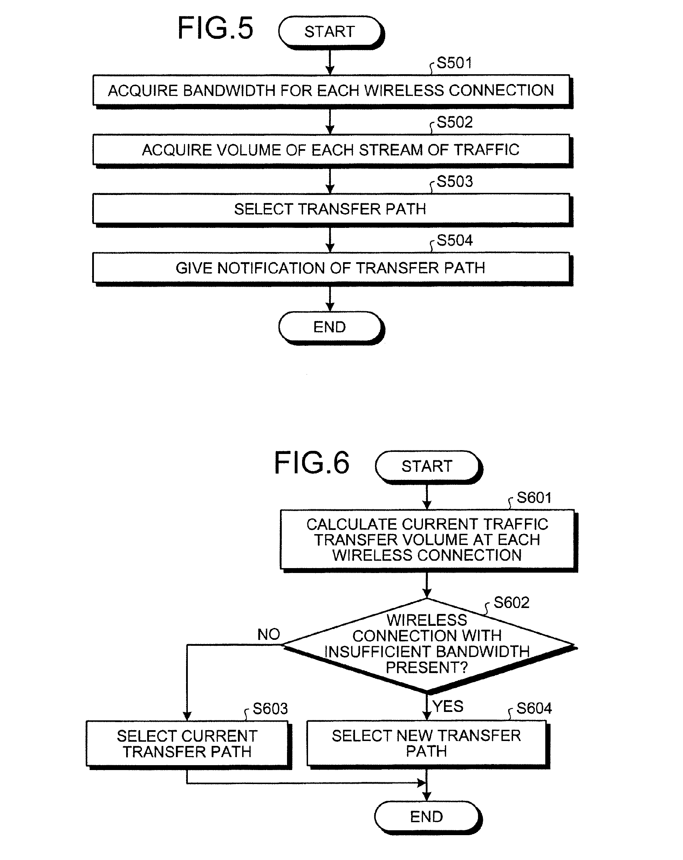

FIG. 5 is a flowchart of an example of a process by the transfer controller. The transfer controller 110, for example, repeatedly executes the steps depicted in FIG. 5. A transfer path for each stream of traffic in an initial state is set in advance. The transfer controller 110 first acquires a bandwidth for each wireless connection in the network 200 (step S501). For example, the transfer controller 110 acquires the bandwidth reported by each base station performing the operations depicted in FIGs. 3 and 4.

The transfer controller 110 then acquires the volume of each stream of traffic transferred through the network 200 (step S502). For example, the transfer controller 110 acquires the volume of each stream of traffic by monitoring each stream of traffic passing through the transfer controller 110. The transfer controller 110 then selects a transfer path for each stream of traffic, based on the bandwidth for each wireless connection and the volume of each stream of traffic acquired at step S501 and S502 (step S503).

The transfer controller 110 then gives notification of the transfer path selected at step S503 to the base stations 211 to 214 (step S504), and ends the series of operations. By executing the steps depicted in FIG. 5 periodically, a proper transfer path can be selected even if the bandwidth and traffic volume change at each wireless connection.

At step S504, the transfer controller 110 gives notification of the selected transfer path to at least a base station included in a transfer path for given traffic in the system. At step S504, the transfer controller 110 transmits a control signal to each of the base stations 212 to 214 via the base station 211 and thereby gives notification of the transfer path. The base stations 211 to 214 each make transfer setting, based on the transfer path received from the transfer controller 110 at step S504.

FIG. 6 is a flowchart of a transfer path selecting process. At step S503 in FIG. 5, the transfer controller 110 executes, for example, the steps depicted in FIG. 6. The transfer controller 110 first calculates the current traffic transfer volume at each wireless connection, based on the current transfer path for each stream of traffic and the volume of each stream of traffic calculated at step S502 (step S601).

The transfer controller 110 then determines whether a wireless connection with insufficient bandwidth is present, based on the bandwidth for each wireless connection acquired at step S501 in FIG. 5 and the traffic transfer volume at each wireless connection calculated at step S601 (step S602). If a wireless connection with insufficient bandwidth is not present (step S602: NO), the transfer controller 110 selects the current transfer path (step S603), and ends the series of operations.

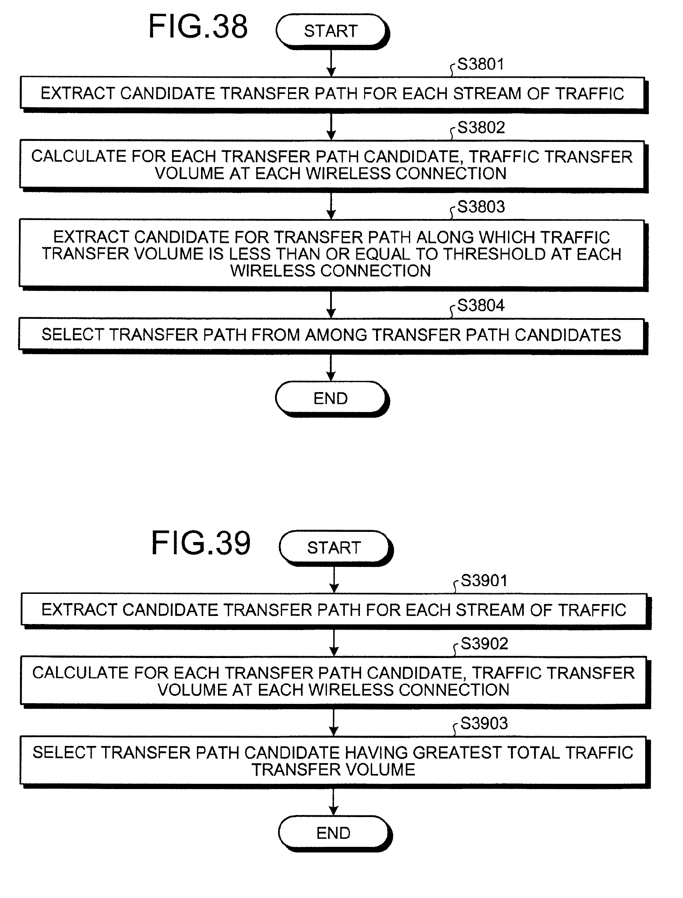

If a wireless connection with insufficient bandwidth is present (step S602: YES), the transfer controller 110 selects a new transfer path (step S604), and ends the series of steps. At step S604, for example, based on topology information of the network 200, candidates for combinations of transfer paths for traffic are extracted and a combination of transfer paths is selected from among the extracted candidates. The topology information is, for example, information indicative of each wireless connection in the network 200. A specific process of transfer path selection will be described later (see, e.g., FIGs. 38 and 39).

### <Specific Example of Transfer Path Control>

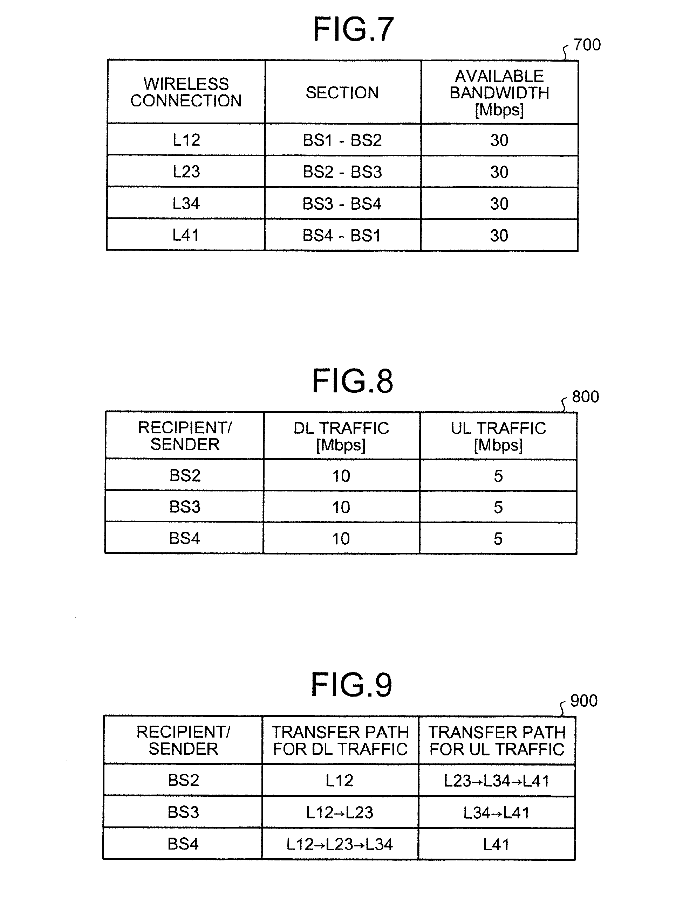

FIG. 7 depicts an example of bandwidths for wireless connections in the network depicted in FIG. 2. A table 700 depicted in FIG. 7 indicates a section and available bandwidth [Mbps] for each wireless connection in the network 200 depicted in FIG. 2. BS1 to BS4 represent base stations 211 to 214, respectively (which applies also to the following description). The wireless connections and sections in the table 700 constitute the topology information of the network 200.

The transfer controller 110 makes the table 700 based on the bandwidth for each wireless connection acquired at step S501 in FIG. 5. As indicated in the table 700, a bandwidth of 30 [Mbps] can be used at each wireless connection in the network 200 depicted in FIG. 2.

FIG. 8 depicts an example of the volume of traffic of each base station in the network of FIG. 2. A table 800 depicted in FIG. 8 indicates the volume of DL traffic [Mbps] and the volume of UL traffic [Mbps] for each of the base stations 212 to 214 in the network 200. The transfer controller 110 makes the table 800 based on the volume of each stream of traffic acquired at step S502 in FIG. 5.

As indicated in the table 800, each of the base stations 212 to 214 communicates with a mobile station connected to the base station to create DL traffic and UL traffic, which are 10 [Mbps] and 5 [Mbps], respectively. The base station 211 directly transmits to and receives from the core network 201, traffic that is not transferred through the network 200, and is therefore omitted from the table 800.

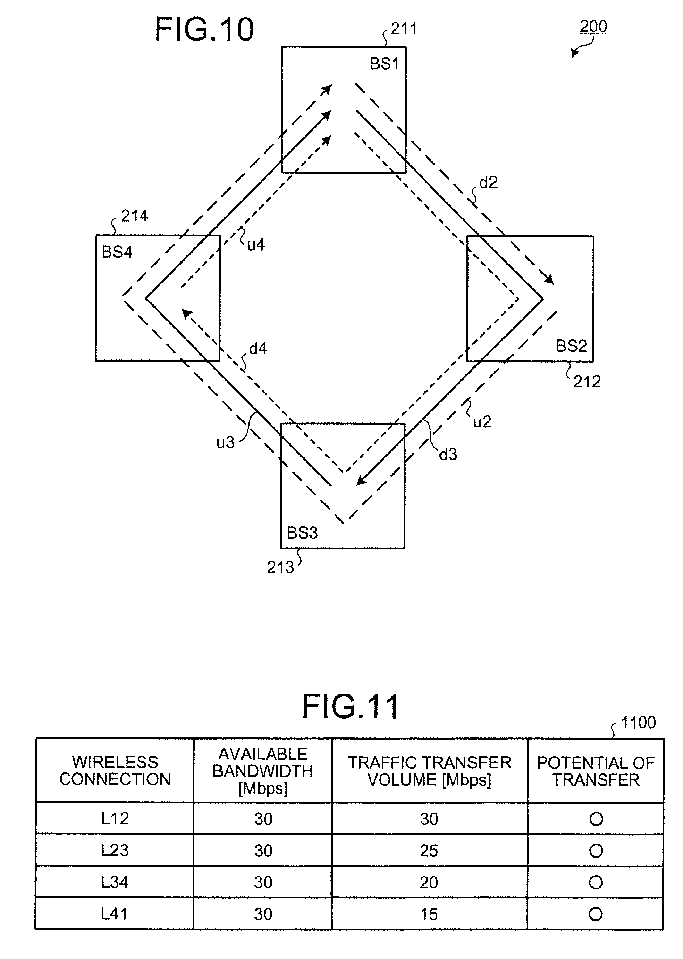

FIGs. 9 and 10 depict an example of transfer paths for traffic in the network of FIG. 2. A table 900 of FIG. 9 indicates transfer paths for traffic of the base stations 212 to 214. The transfer controller 110 makes the table 900 based on the transfer paths selected at step S503 in FIG. 5. FIG. 10 depicts transfer of streams of traffic based on the table 900. DL traffic of the base stations 212 to 214 is indicated as DL traffic d2 to d4, respectively. UL traffic of the base stations 212 to 214 is indicated as UL traffic u2 to u4, respectively.

For example, the DL traffic d2 of the base station 212 (BS2) is transferred from the base station 211 to the base station 212. In this case, the transfer path for the DL traffic d2 is the wireless connection L12. The UL traffic u2 of the base station 212 is transferred from the base station 212 through the base station 213 and the base station 214 to the base station 211. In this case, the transfer path for the UL traffic u2 includes the wireless connections L23, L34, and L41.

The DL traffic d3 of the base station 213 (BS3) is transferred from the base station 211 through the base station 212 to the base station 213. In this case, the transfer path for the DL traffic d3 includes the wireless connections L12 and L23. The UL traffic u3 of the base station 213 is transferred from the base station 213 through the base station 214 to the base station 211. In this case, the transfer path for the UL traffic u3 includes the wireless connections L34, and L41.

The DL traffic d4 of the base station 214 (BS4) is transferred from the base station 211 through the base station 212 and the base station 213 to the base station 214. In this case, a transfer path for the DL traffic d4 includes the wireless connections L12, L23, and L34. The UL traffic u4 of the base station 214 is transferred from the base station 214 to the base station 211. In this case, a transfer path for the UL traffic u4 is the wireless connection L41.

FIG. 11 depicts the potential of wireless connection transfer by each transfer paths depicted in FIGs. 9 and 10. A table 1100 depicted in FIG. 11 indicates for the transfer paths in FIGs. 9 and 10, available bandwidth, the traffic transfer volume [Mbps], and the potential of transfer at each wireless connection. The transfer controller 110 makes the table 1100 based on the traffic transfer volume at each wireless connection, calculated at step S601 in FIG. 6.

For example, the DL traffic d2 to d4 are transferred through the wireless connection L12, which, therefore, has a traffic transfer volume of 10+10+10=30 [Mbps]. Bandwidth for the wireless connection L12 is 30 [Mbps]. Hence, transfer through the wireless connection L12 is possible (O). The DL traffic d3 and d4 and the UL traffic u2 are transferred through the wireless connection L23, which, therefore, has a traffic transfer volume of 10+10+5=25[Mbps]. Bandwidth for the wireless connection L23 is 30 [Mbps]. Hence, transfer through the wireless connection L23 is possible (O).

The DL traffic d4 and the UL traffic u2 and u3 are transferred through the wireless connection L34, which, therefore, has a traffic transfer volume of 10+5+5=20 [Mbps]. Bandwidth for the wireless connection L34 is 30 [Mbps]. Hence, transfer through the wireless connection L34 is possible (O). The UL traffic u2 to u4 are transferred through the wireless connection L41, which, therefore, has a traffic transfer volume of 5+5+5=15[Mbps]. Bandwidth for the wireless connection L41 is 30 [Mbps]. Hence, transfer through the wireless connection L41 is possible (O).

According to the transfer paths for the traffic depicted in FIGs. 9 and 10, the traffic transfer volume is less than or equal to the bandwidth at each wireless connection, which enables the transfer of all traffic. In this manner, the transfer controller 110 selects from among candidates for transfer paths, transfer paths along which the traffic transfer volume is less than or equal to the bandwidth at each wireless connection.

The transfer controller 110 acquires the volume of UL traffic and that of DL traffic, and controls a transfer path for the UL traffic and a transfer path for the DL traffic, thereby enabling transfer of the UL traffic and the DL traffic of the same base station through different paths. As a result, a transfer path for each stream of traffic is controlled flexibly to improve throughput.

### <State Change 1 of Network>

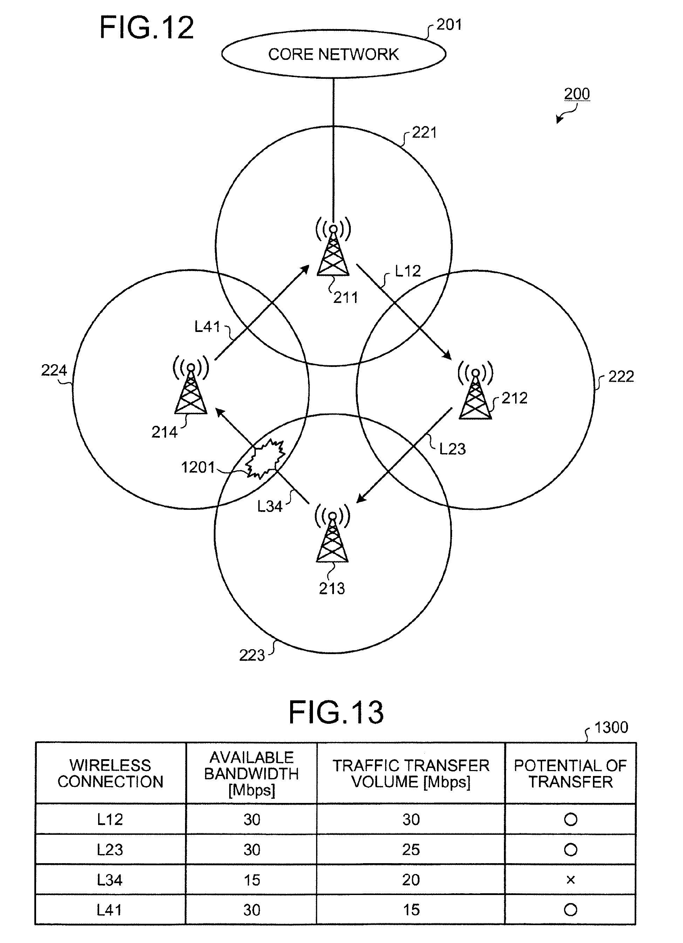

FIG. 12 depicts a state change 1 of the network. In FIG. 12, components identical to those depicted in FIG. 2 are denoted by the same reference numerals used in FIG. 2 and description thereof is omitted. As depicted in FIG. 12, it is assumed that the wireless communication quality of the wireless connection L34 between the base station 213 and the base station 214 has deteriorated (which is represented by reference numeral 1201). In this case, the base stations 213 and 214 change the modulation method currently used at the wireless connection L34 to a modulation method of a lower processing rate. As a result, available bandwidth for the wireless connection L34 decreases to 15 [Mbps].

FIG. 13 depicts an example of the potential of transfer through each wireless connection in the network of FIG. 12. A table 1300 depicted in FIG. 13 indicates available bandwidth, the traffic transfer volume [Mbps], and the potential of transfer at each wireless connection in the network 200 depicted in Fig 12. The transfer controller 110 makes the table 1300 based on the traffic transfer volume at each wireless connection, calculated at step S601 of FIG. 6.

Because the available bandwidth for the wireless connection L34 has decreased to 15 [Mbps], the traffic transfer volume (20 [Mbps]) at the wireless connection L34 becomes greater than the bandwidth. As a result, transfer through the wireless connection L34 becomes impossible (x). The transfer controller 110, therefore, selects a new transfer path for each stream of traffic by executing step S604 of FIG. 6.

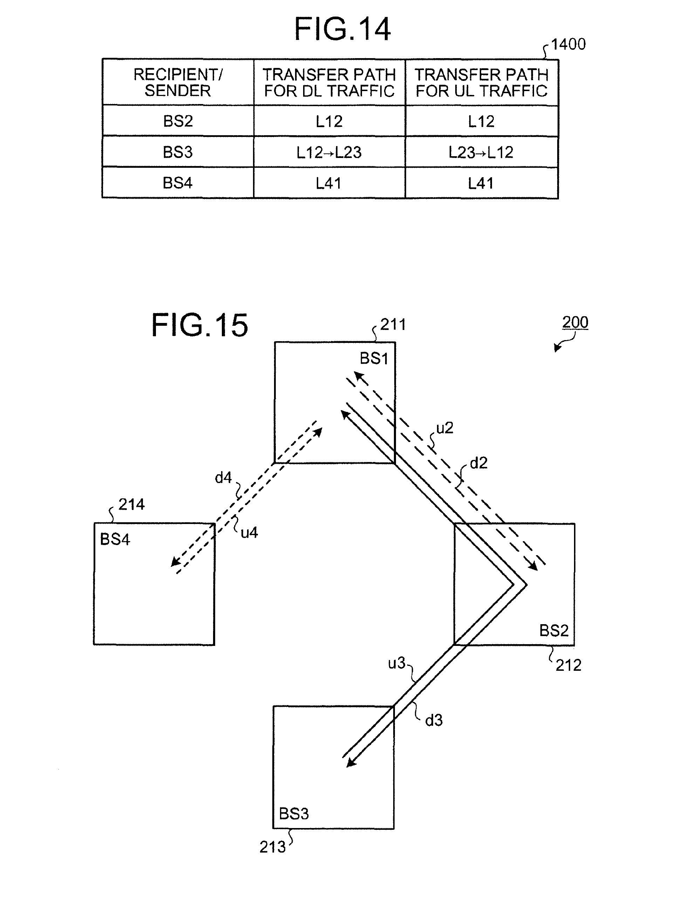

FIGs. 14 and 15 depict an example of transfer paths for traffic in the network of FIG. 12. A table 1400 depicted in FIG. 14 indicates transfer paths for traffic of the respective base stations 212 to 214 in the network 200 of FIG. 12. When the network 200 enters the state depicted in FIG. 12, where transfer through the wireless connection L34 is impossible (see FIG. 13), the transfer controller 110 selects new transfer paths and makes the table 1400. FIG. 15 depicts transfer of each stream of traffic based on the table 1400. In FIG. 15, components identical to those depicted in FIG. 10 are denoted by the same reference numerals used in FIG. 10 and description thereof is omitted.

The DL traffic d2 of the base station 212 (BS2) is transferred from the base station 211 to the base station 212. In this case, the transfer path for the DL traffic d2 is the wireless connection L12. The UL traffic u2 of the base station 212 is transferred from the base station 212 to the base station 211. In this case, the transfer path for the UL traffic u2 is the wireless connection L12.

The DL traffic d3 of the base station 213 (BS3) is transferred from the base station 211 through the base station 212 to the base station 213. In this case, the transfer path for the DL traffic d3 is composed of the wireless connections L12 and L23. The UL traffic u3 of the base station 213 is transferred from the base station 213 through the base station 212 to the base station 211. In this case, the transfer path for the UL traffic u3 is composed of the wireless connections L23 and L12.

The DL traffic d4 of the base station 214 (BS4) is transferred from the base station 211 to the base station 214. In this case, the transfer path for the DL traffic d4 is the wireless connections L41. The UL traffic u4 of the base station 214 is transferred from the base station 214 to the base station 211. In this case, the transfer path for the UL traffic u4 is the wireless connection L41.

In this example, to avoid use of the wireless connection L34 having become short of a bandwidth, the transfer controller 110 selects a tree-shaped route made up of two routes starting from the base station 211, which include a route from the base station 211 through the base station 212 to the base station 213 and a route from the base station 211 to the base station 214.

In the transfer paths depicted in FIGs. 14 and 15, bi-directional wireless communication is performed at wireless connections L12, L23, and L41. Bi-directional wireless communication can be performed, for example, by changing the time ratio between DL and UL by time division multiplexing (TDM). Bi-directional wireless communication can also be performed by changing the frequency width used in DL and in UL by frequency division multiplexing (FDM).

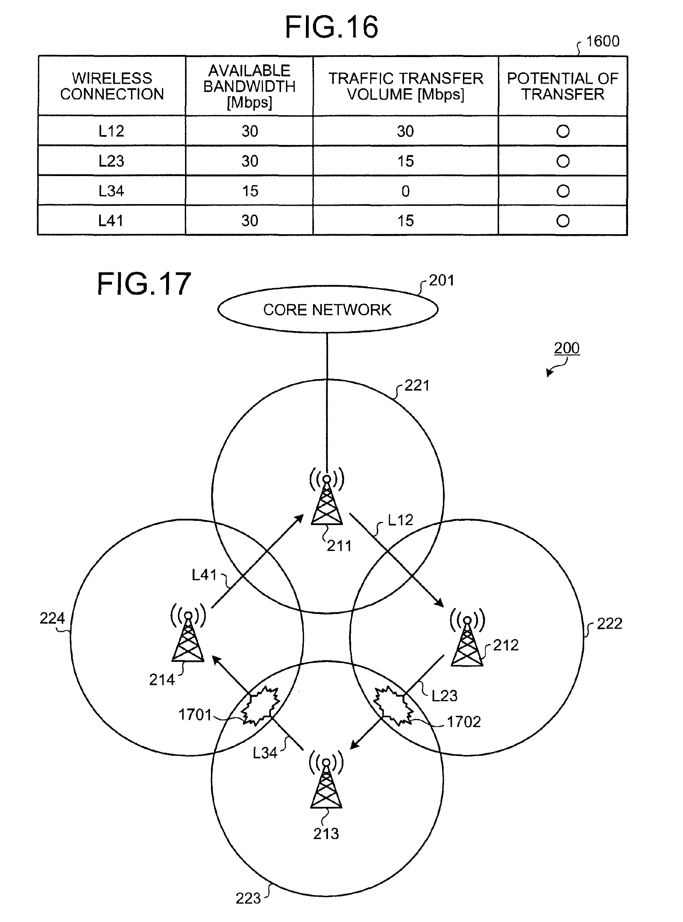

FIG. 16 depicts the potential of transfer at each wireless connection through the transfer paths of FIGs. 14 and 15. A table 1600 depicted in FIG. 16 indicates available bandwidth, the traffic transfer volume [Mbps], and the potential of transfer at each wireless connection, for the transfer paths depicted in FIGs. 14 and 15. The transfer controller 110 makes the table 1600 based on the traffic transfer volume at each wireless connection, calculated at step S601 of FIG. 6.

The DL traffic d2, d3 and the UL traffic u2, u3 are transferred through the wireless connection L12, which, therefore, has a traffic transfer volume of 10+10+5+5=30 [Mbps]. The bandwidth for the wireless connection L12 is 30 [Mbps]. Hence, transfer through the wireless connection L12 is possible (O). The DL traffic d3 and the UL traffic u3 are transferred through the wireless connection L23, which, therefore, has a traffic transfer volume of 10+5=15[Mbps]. The bandwidth for the wireless connection L23 is 30 [Mbps]. Hence, transfer through the wireless connection L23 is possible (O).

No traffic is transferred through the wireless connection L34, which, therefore, has a traffic transfer volume of zero. Hence, transfer through the wireless connection L34 is possible (O). The DL traffic d4 and the UL traffic u4 are transferred through the wireless connection L41, which, therefore, has a traffic transfer volume of 10+5=15[Mbps]. The bandwidth for the wireless connection L41 is 30 [Mbps]. Hence, transfer through the wireless connection L41 is possible (O).

According to the transfer paths for the traffic depicted in FIGs. 14 and 15, the traffic transfer volume is less than or equal to the bandwidth at each wireless connection, enabling transfer of all traffic. In this manner, the transfer controller 110 selects from among candidates for transfer paths, a transfer path along which the traffic transfer volume is less than or equal to the bandwidth at each wireless connection.

### <State Change 2 of Network>

FIG. 17 depicts a state change 2 of the network. In FIG. 17, components identical to those depicted in FIG. 2 are denoted by the same reference numerals used in FIG. 2 and description thereof is omitted. As depicted in FIG. 17, it is assumed that the wireless communication quality of the wireless connection L34 between the base station 213 and the base station 214 has deteriorated (which is represented by reference numeral 1701). Further, the wireless communication quality of the wireless connection L23 between the base station 212 and the base station 213 has deteriorated.

In this case, the base stations 213 and 214 change the modulation method currently used at the wireless connection L34 to a modulation method of a lower processing rate. As a result, available bandwidth for the wireless connection L34 decreases to 5 [Mbps]. Further, the base stations 212 and 213 change the modulation method currently used at the wireless connection L23 to a modulation method of a lower processing rate. As a result, available bandwidth for the wireless connection L23 decreases to 10 [Mbps].

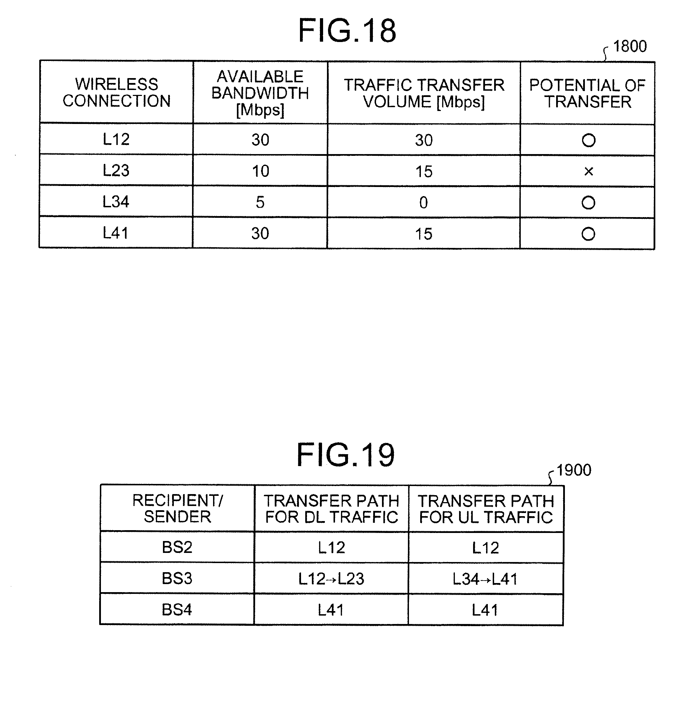

FIG. 18 depicts an example of the potential of transfer through each wireless connection in the network of FIG. 17. A table 1800 depicted in FIG. 18 indicates available bandwidth, the traffic transfer volume [Mbps], and the potential of transfer at each wireless connection in the network 200 depicted in FIG. 17. The transfer controller 110 makes the table 1800 based on the traffic transfer volume at each wireless connection, calculated at step S601 of FIG. 6.

Because the available bandwidth for the wireless connection L23 has decreased to 10 [Mbps], the traffic transfer volume (20 [Mbps]) at the wireless connection L23 becomes greater than the available bandwidth. As a result, transfer of the DL traffic d3 and the UL traffic u3 through the wireless connection L23 becomes impossible (x). The transfer controller 110, therefore, selects a new transfer path for each stream of traffic by executing step S604 of FIG. 6.

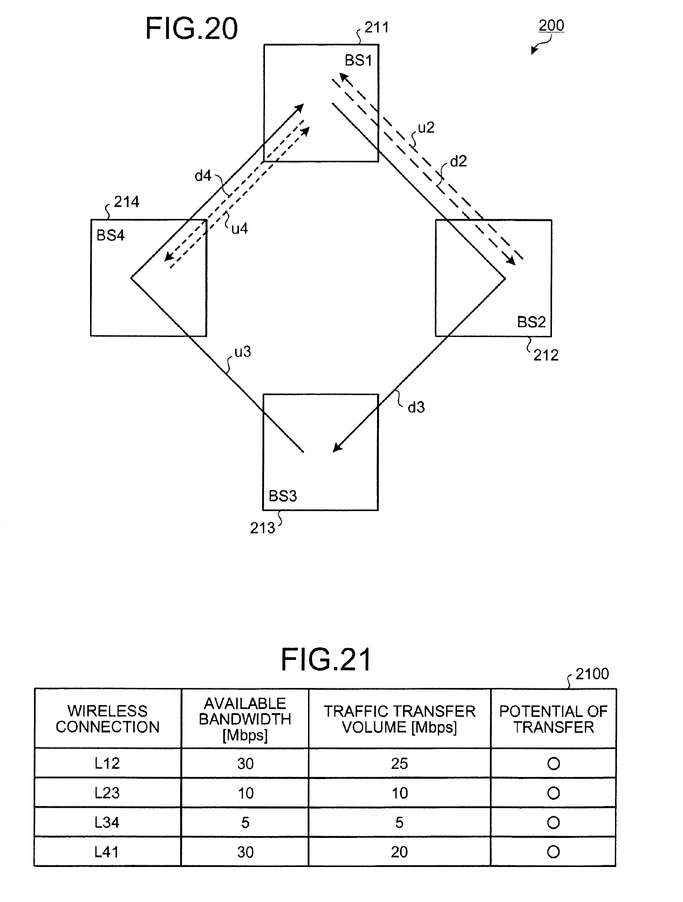

FIGs. 19 and 20 depict an example of transfer paths for traffic in the network of FIG. 17. A table 1900 depicted in FIG. 19 indicates transfer paths for traffic of the respective base stations 212 to 214 in the network 200 of FIG. 17. When the network 200 enters the state depicted in FIG. 17, where transfer through the wireless connection L23 is impossible (see FIG. 18), the transfer controller 110 selects new transfer paths and makes the table 1900. FIG. 20 depicts transfer of each stream of traffic based on the table 1900. In FIG. 20, components identical to those depicted in FIG. 10 are denoted by the same reference numerals used in FIG. 10 and description thereof is omitted.

The UL traffic u3 of the base station 23 (BS3) is transferred from the base station 213 to the base station 214, and then to base station 211, sequentially. In this case, the transfer path for the UL traffic u3 includes the wireless connections L12 and L41. Transfer paths for other streams of traffic are identical to those depicted in FIGs. 14 and 15.

FIG. 21 depicts the potential of transfer at each wireless connection through the transfer paths of FIGs. 19 and 20. A table 2100 depicted in FIG. 21 indicates available bandwidth, the traffic transfer volume [Mbps], and the potential of transfer at each wireless connection, for the transfer paths depicted in FIGs. 19 and 20. The transfer controller 110 makes the table 2100 based on the traffic transfer volume at each wireless connection, calculated at step S601 of FIG. 6.

The DL traffic d2, d3 and the UL traffic u2 are transferred through the wireless connection L12, which, therefore, has a traffic transfer volume of 10+10+5=25 [Mbps]. The bandwidth for the wireless connection L12 is 30 [Mbps]. Hence, transfer through the wireless connection L12 is possible (O). The DL traffic d3 is transferred through the wireless connection L23, which, therefore, has a traffic transfer volume of 10 [Mbps]. The bandwidth for the wireless connection L23 is 10 [Mbps]. Hence, transfer through the wireless connection L23 is possible (O).

The UL traffic u3 is transferred through the wireless connection L34, which, therefore, has a traffic transfer volume of 5 [Mbps]. The bandwidth for the wireless connection L34 is 5 [Mbps]. Hence, transfer through the wireless connection L34 is possible (O). The DL traffic d4 and the UL traffic u3, u4 are transferred through the wireless connection L41, which, therefore, has a traffic transfer volume of 10+5+5=20[Mbps]. The bandwidth for the wireless connection L41 is 30 [Mbps]. Hence, transfer through the wireless connection L41 is possible (O).

According to the transfer paths for the traffic depicted in FIGs. 19 and 20, the traffic transfer volume is less than or equal to the bandwidth at each wireless connection, enabling transfer of all traffic. In this manner, the transfer controller 110 selects from among candidates for transfer paths, a transfer path along which the traffic transfer volume is less than or equal to the bandwidth at each wireless connection.

In this manner, the transfer controller 110 of the first embodiment controls a transfer path, based on the bandwidth and the traffic volume at each wireless connection interconnecting multiple wireless communication devices. Therefore, even if the bandwidth for each wireless connection changes due to an environmental change, a drop in throughput of traffic is suppressed to improve the reliability of the network.

For example, applying the transfer controller 110 to the network 200 suppresses a drop in throughput of each stream of traffic that the base stations 212 to 214 transmit and receive to and from a mobile station, and thereby improves the reliability of the network.

### (Second Embodiment)

### <Communication System>

A communication system according to a second embodiment is similar to the communication system depicted in FIG. 1A. In the communication system of the second embodiment, the wireless communication devices 101 to 103 each serve as a base station that transfers through the network 100, traffic that the wireless communication device 101 to 103 transmits to and receives from a mobile station.

The control unit 113 of the transfer controller 110 of the second embodiment controls based on the bandwidth and the traffic transfer volume at each wireless connection, the transmission power of at least any one of the wireless communication devices 101 to 103, the transmission power being used for transmission to a mobile station. For example, if no transfer path along which the bandwidth and the traffic transfer volume at each wireless connection meet a prescribed condition is present, the control unit 113 controls the transmission power of at least one of the wireless communication devices 101 to 103.

For example, the control unit 113 controls the transmission power of a base station by giving to the base station, notification of the transmission power for the base station, determined based on the bandwidth and the traffic volume at each wireless connection. When receiving notification of the transmission power from the transfer controller 110, the wireless communication devices 101 to 103 each set the transmission power for transmission from the wireless communication device 101 to 103 to a mobile station.

For example, the control unit 113 identifies among the wireless communication devices 101 to 103, a base station that has insufficient bandwidth and cannot transfer based on the prescribed condition, traffic that the base station transmits and receives with respect to a mobile station. The control unit 113 decreases the transmission power of the identified base station. The prescribed condition is the same as the above prescribed condition for transfer path selection, and therefore, requires that the traffic transfer volume be less than or equal to the bandwidth at each wireless connection. Hence, a mobile station connected to the base station that has insufficient bandwidth is caused to switch to a different base station through a handover process, which reduces the volume of traffic at the base station that has insufficient bandwidth.

The control unit 113 also identifies among the wireless communication devices 101 to 103, a base station that has insufficient bandwidth and an adjacent base station adjacent to the identified base station. The identified adjacent base station is the base station to which the mobile station switches, through a handover process, from the base station having insufficient bandwidth. The control unit 113 lowers the ratio of the transmission power of the base station that has insufficient bandwidth to the transmission power of the adjacent base station. Hence, the mobile station connected to the base station that has insufficient bandwidth is caused to switch to the adjacent base station through the handover process, which reduces the volume of traffic at the base station having insufficient bandwidth.

To lower the ratio of the transmission power of the bandwidth shortage base station to the transmission power of the adjacent base station, for example, the control unit 113 decreases the transmission power of the base station that has insufficient bandwidth, or increases the transmission power of the adjacent base station, or decreases the transmission power of the base station while increasing the transmission power of the adjacent base station.

In this manner, the transmission power of at least one of the wireless communication devices 101 to 103, the transmission power being used for transmission to a mobile station, is controlled to cause the mobile station to perform handover. As a result, a transfer path (sender or recipient) for a portion of the traffic can be controlled.

### <Specific Example of Network and Process by Base Station>

A specific example of the network 100 of the second embodiment is the same as, for example, the network 200 depicted in FIG. 2. A process by each of the bases stations 211 to 214 of the second embodiment is, for example, the same as the processes depicted in FIGs. 3 and 4.

### <Process by Transfer Controller>

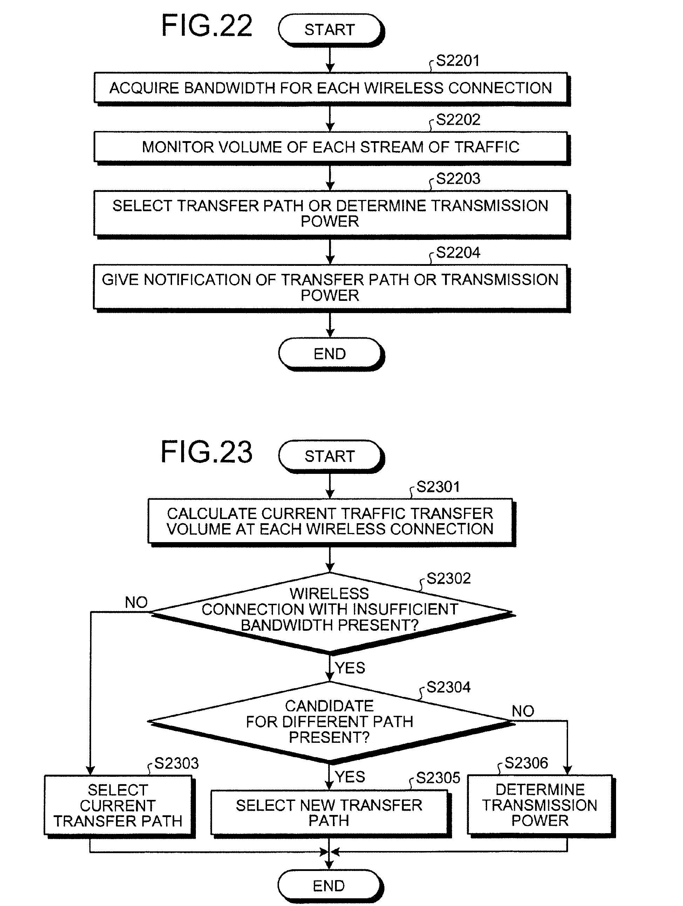

FIG. 22 is a flowchart of an example of a process by the transfer controller of the second embodiment. The transfer controller 110, for example, repeatedly executes steps in FIG. 22. Operations at steps S2201 and S2202 in FIG. 22 are identical to those at steps S501 and S502 in FIG. 5 and therefore, description thereof is omitted. Following step S2202, the transfer controller 110 selects a transfer path for each stream of traffic or determines the transmission power of each of the base stations 211 to 214, the transmission power being used for transmission to a mobile station (step S2203). This step of selecting a transfer path for each stream of traffic is the same as step S503 in FIG. 5.

The transfer controller 110 then gives to the base stations 212 to 214, notification of the transfer path selected at step S2203 or the transmission power determined at step S2203 (step S2204), and ends the series of operations. When selecting the transfer path for each stream of traffic at step S2203, the transfer controller 110 communicates the transfer path at step S2204. When determining the transmission power of each base station at step S2203, the transfer controller 110 communicates the transmission power at step S2204.

When receiving a communication of the transmission power at step S2204, the base stations 212 to 214 respectively change the transmission power for transmission to the mobile station to the transmission power indicated by the notification from the transfer controller 110. As a result, the coverage of each of the base stations 212 to 214 (each of the cells 221 to 224) changes, which causes some of mobile stations connected to the base stations 212 to 214 to switch, through a handover process, to base stations other than the base stations to which the mobile stations are originally connected. Consequently, the number of mobile stations connected to the base stations 212 to 214 changes, thereby changing the traffic at each of the base stations 212 to 214.

FIG. 23 is a flowchart of a transfer path selecting process according to the second embodiment. At step S2203 in FIG. 22, the transfer controller 110 executes, for example, the steps in FIG. 23. Operations at steps S2301 to S2303 are identical to those at steps S601 to S603 in FIG. 6 and therefore, description thereof is omitted. At step S2302, when a wireless connection short of bandwidth is present, the transfer controller 110 determines whether a candidate for a different transfer path meeting the prescribed condition is present (step S2304). The prescribed condition is, for example, a condition that the traffic transfer volume is less than or equal to the bandwidth at each wireless connection.

If a candidate for a different transfer path is present at step S2304 (step S2304: YES), the transfer controller 110 selects a new transfer path (step S2305), and ends the series of operations. If a candidate for a different transfer path is not present (step S2304: NO), the transfer controller 110 determines the transmission power of the base stations 211 to 214, the transmission power being used for transmission to a mobile station (step 2306), and ends the series of steps.

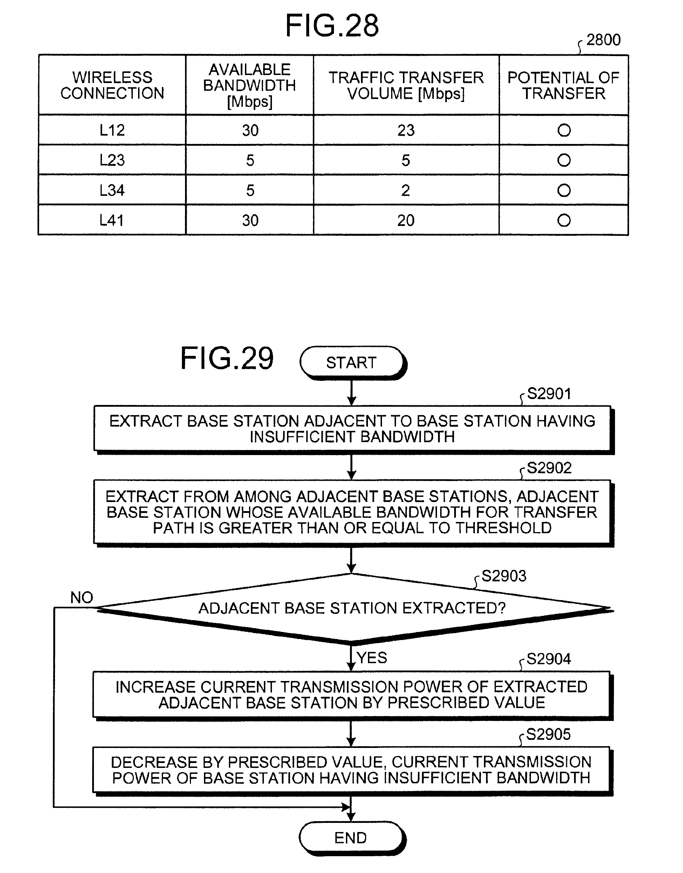

In this manner, if no candidate for a transfer path meeting the prescribed condition is present, the coverage of each of the base stations 212 to 214 is changed, which changes the volume of traffic at each of the base stations 212 to 214, bringing about a state where a candidate for a transfer path meeting the prescribed condition becomes present. A specific example of a transmission power determining process will be described later (see, e.g., FIGs. 29 to 32).

At step S2203 in FIG. 22, in lieu of a transfer path, transmission power may be determined. In such a case, steps S2304 and S2305 in FIG. 23 are omitted, and if a wireless connection short of a bandwidth is present at step S2302, the transfer controller 110 proceeds to step S2306.

### <State Change 3 of Network>

It is assumed that as a result of the occurrence of a state change 3 of the network, the state of the network 200 changes from the state depicted in FIG. 17 to a state where the wireless communication quality of the wireless connection L23 between the base station 212 and the base station 213 has deteriorated. In this case, the base stations 212 and 213 change the modulation method currently used at the wireless connection L23 to a modulation method of a lower processing rate. As a result, available bandwidth for the wireless connection L23 decreases to 5 [Mbps].

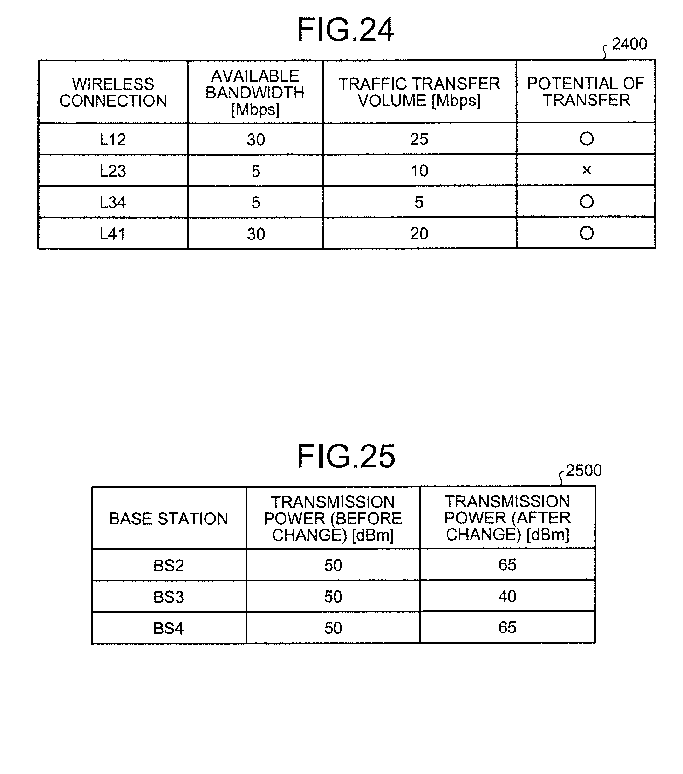

FIG. 24 depicts an example of the potential of transfer through each wireless connection resulting from the state change 3 of the network. A table 2400 depicted in FIG. 24 indicates the available bandwidth, the traffic transfer volume [Mbps], and the potential of transfer at each wireless connection resulting from the state change 3 of the network. The transfer controller 110 makes the table 2400 based on the traffic transfer volume at each wireless connection calculated at step S2301 in FIG. 23.

Because the available bandwidth for the wireless connection L23 has decreased to 5 [Mbps], the traffic transfer volume (10 [Mbps]) at the wireless connection 23 becomes larger than the bandwidth. As a result, transfer through the wireless connection L23 becomes impossible (x). The transfer controller 110, therefore, executes step S2304 in FIG. 23 to determine whether a transfer path meeting the prescribed condition is present. In this example, the transfer controller 110 determines that no transfer path meeting the prescribed condition is present.

In this case, if traffic is transferred using the current transfer path, of the entire UL traffic u3 of 10 [Mbps] to be transferred, a portion of 5 [Mbps] cannot be transferred through the wireless connection L23, and consequently, is discarded. The transfer controller 110 determines the transmission power of each of the base stations 211 to 214 by executing step S2306 in FIG. 23 and thereby, changes the transmission power of each of the base stations 211 to 214.

For example, as indicated in the table 2400, the wireless connections L12 and L41 have available bandwidths of 5 [Mbps] and 10 [Mbps], respectively. For this reason, if the UL traffic u3 of the base station 213 originally transferred through the wireless connection L23 is transferred by using the wireless connections L12 and L41, discarding of the UL traffic u3 is avoided.

The transfer controller 110, for example, decreases the transmission power of the base station 213 and at the same time, increases the transmission power of the base stations 212 and 214. As a result, the cell 223 of the base station 213 decreases in size, while the cell 222 of the base station 212 and the cell 224 of the base station 214 increase in size, causing some of the mobile stations connected to the base station 213 to switch, through a handover process, to the base station 212 or 214 adjacent to the base station 213.

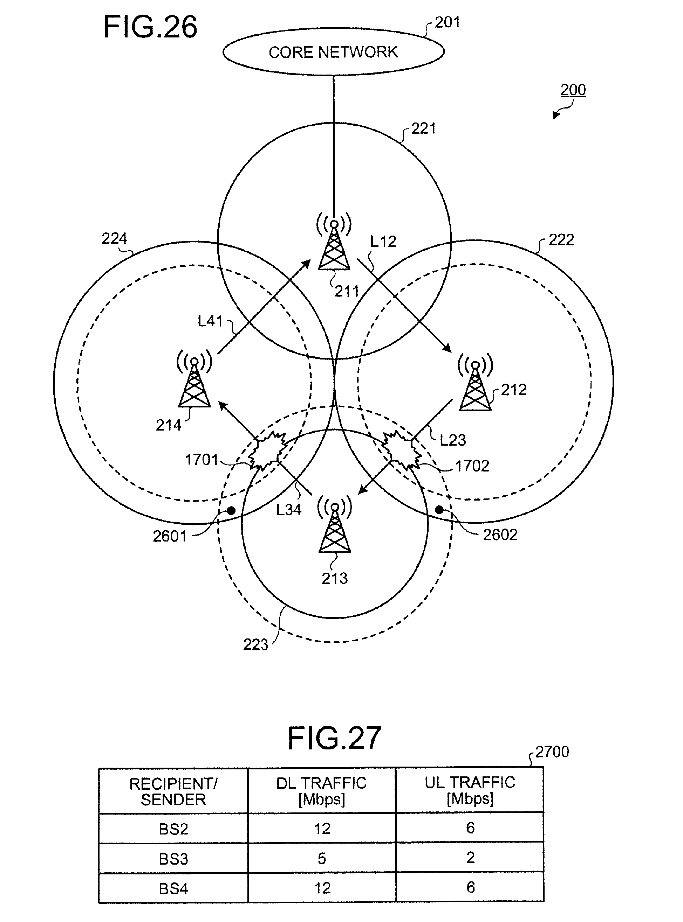

FIGs. 25 and 26 depict an example of transmission power change. A table 2500 depicted in FIG. 25 indicates the pre-change transmission power [dBm] and the post-change transmission power [dBm], for each of the base stations 212 to 214. As indicated in the table 2500, the pre-change transmission power of each of the base stations 212 to 214 is 50 [dBm].

The transfer controller 110 decreases the transmission power of the base station 213 to 40 [dBm] and thereby, decreases the coverage area of the base station 213. The transfer controller 110 increases the transmission power of each of the base stations 212 and 214 to 65 [dBm] and thereby, expands respective coverage areas of the base stations 212 and 214.

In FIG. 26, components identical to those depicted in FIG. 17 are denoted by the same reference numerals used in FIG. 17 and description thereof is omitted. As depicted in FIG. 26, the transfer controller 110 decreases the size of the cell 223 of the base station 213 and expands the size of the cells 222 and 224 of the base stations 212 and 214. Dotted lines in FIG. 26 represent the cells 222 to 224 before the transmission power change.

As a result, a position 2601 in the cell 223 before the transmission power change becomes located outside of the cell 223 and comes to be located in the cell 224. As a result, a mobile station situated at the position 2601 switches from the base station 213 to the base station 214 through a handover process. A position 2602 in the cell 223 before the transmission power change becomes located outside of the cell 223 and comes to be located in the cell 222. As a result, a mobile station situated at the position 2602 switches from the base station 213 to the base station 212 through a handover process.

FIG. 27 depicts an example of the volume of each stream of traffic that has changed because of a transmission power change. A table 2700 depicted in FIG. 27 indicates a DL traffic volume [Mbps] and a UL traffic volume [Mbps] for each of the base stations 212 to 214 of the network 200 depicted in FIG. 26. The transfer controller 110 makes the table 2700, based on each traffic volume acquired at step S2202 in FIG. 22.

As depicted in FIG. 26, because the cell 222 of the base station 212 has been expanded, mobile stations connected to the base station 212 have increased in number. As a result, as indicated in the table 2700, the volumes of the DL traffic d2 and of the UL traffic u2 of the base station 212 have respectively increased to 12 [Mbps] and 6 [Mbps], and are greater than the volumes of the DL traffic d2 and of the UL traffic u2 indicated in FIG. 8.

Because the cell 223 of the base station 213 has decreased in size, mobile stations connected to the base station 213 have decreased in number. As a result, as indicated in the table 2700, the volumes of the DL traffic d3 and of the UL traffic u3 of the base station 213 have decreased respectively to 5 [Mbps] and 2 [Mbps], and are less than the volumes of the DL traffic d3 and of the UL traffic u3 indicated in FIG. 8.

Because the cell 224 of the base station 214 has been expanded, mobile stations connected to the base station 214 have increased in number. As a result, as indicated in the table 2700, the volumes of the DL traffic d4 and of the UL traffic u4 of the base station 214 have increased to respectively 12 [Mbps] and 6 [Mbps], and are greater than the volumes of the DL traffic d4 and of the UL traffic u4 indicated in FIG. 8.

FIG. 28 depicts an example of the potential of transfer of the traffic volumes indicated in FIG. 27, through each wireless connection. A table 2800 depicted in FIG. 28 indicates the available bandwidth, the traffic transfer volumes in FIG. 27, and the potential of transfer at each wireless connection, for the transfer paths depicted in FIGs. 19 and 20. The transfer controller 110 makes the table 2800 based on the traffic transfer volume at each wireless connection calculated at step S2301 of FIG. 23. The bandwidth at each wireless connection indicated in the table 2800 is the same as the bandwidth indicated in FIG. 24. In contrast, the traffic transfer volume at each wireless connection indicated in the table 2800 has changed.

For example, the DL traffic d2 to d3 and the UL traffic u2 are transferred through the wireless connection L12, which, therefore, has a traffic transfer volume of 10+5+6=23 [Mbps]. The bandwidth for the wireless connection L12 is 30 [Mbps]. Hence, transfer through the wireless connection L12 is possible (O). The DL traffic d3 is transferred through the wireless connection L23, which, therefore, has a traffic transfer volume of 5 [Mbps]. The bandwidth for the wireless connection L23 is 5 [Mbps]. Hence, transfer through the wireless connection L23 is possible (O).

The UL traffic u3 is transferred through the wireless connection L34, which, therefore, has a traffic transfer volume of 2 [Mbps]. The bandwidth for the wireless connection L34 is 5 [Mbps]. Hence, transfer through the wireless connection L34 is possible (O). The DL traffic d4 and the UL traffic u3 and u4 are transferred through the wireless connection L41, which, therefore, has a traffic transfer volume of 12+2+6=20 [Mbps]. The bandwidth for the wireless connection L41 is 30 [Mbps]. Hence, transfer through the wireless connection L41 is possible (O).

Of the total decrease in traffic of 8 [Mbps] at the base station 213, 3 [Mbps] of the traffic has been distributed to the base station 212 and to the base station 214, respectively, but the remaining 2 [Mbps] of traffic cannot been handed over from the base station 213 to the base station 212 or to the base station 214, thus communication thereof fails. Hence, traffic at the base station 213 amounts to 7 [Mbps]. In this manner, the traffic transfer volume becomes less than or equal to the bandwidth at each wireless connection, which allows transfer of each stream of traffic.

In this manner, by controlling the transmission power of the base stations 211 to 214, the transfer controller 110 can change the transfer path (sender or recipient) for a portion of the traffic. The transfer controller 110, therefore, can control the transfer path for traffic without selecting a new transfer path.

### <Example of Determining Transmission Power>

FIG. 29 is a flowchart of an example 1 of a process of determining the transmission power of the base station. The transfer controller 110 executes at step S2306 in FIG. 23, for example, the steps depicted in FIG. 29. The transfer controller 110 first extracts from among the base stations 211 to 214, an adjacent base station adjacent to a base station having insufficient bandwidth (step S2901). In the example of FIG. 25, because the bandwidth for each stream of traffic at the base station 213 is insufficient, the base station 213 is recognized as a base station having insufficient bandwidth and the base stations 212 and 214 are extracted as adjacent base stations.

Subsequently, the transfer controller 110 extracts from among the adjacent base stations extracted at step S2901, an adjacent base station whose available bandwidth for a transfer path for traffic is greater than or equal to a threshold (step S2902). In the example of FIG. 25, available bandwidth for a transfer path for traffic at the base station 212 is 5 [Mbps], and available bandwidth for a transfer path for traffic at the base station 214 is 10 [Mbps]. If the threshold is 5 [Mbps], therefore, the base stations 212 and 214 are extracted at step S2901. If the threshold is 10 [Mbps], the base station 214 is extracted at step S2901.

The transfer controller 110 then determines whether an adjacent base station extracted at step S2902 is present (step S2903). If no extracted base station is present (step S2903: NO), a series of the operations is ended. In this case, the transfer controller 110 does not change the transmission power of each base station.

If an extracted adjacent base station is present at step S2903 (step S2903: YES), the transfer controller 110 increases the current transmission power of the extracted adjacent base station by a prescribed value (step S2904). In the example of FIG. 25, the transmission power of the extracted adjacent base stations is increased by 15 [dBm]. The transfer controller 110 also decreases by a prescribed value, the current transmission power of a base station having insufficient bandwidth (step S2905), and ends the series of operations. In the example of FIG. 25, the transmission power of the bandwidth shortage base station is reduced by 10 [dBm].

In this manner, among adjacent base stations adjacent to a base station having insufficient bandwidth, the transfer controller 110 increases the transmission power of an adjacent base station having bandwidth available for a transfer path and decreases the transmission power of the base station that has insufficient bandwidth. As a result, a mobile station switches, through a handover process, from the base station having insufficient bandwidth to the adjacent base station having available bandwidth. As a result, the volume of traffic at the base station having insufficient bandwidth is reduced.

In this manner, the transfer controller 110 increases the transmission power of an adjacent base station and decreases the transmission power of a base station that has insufficient bandwidth; and thereby lowers the ratio of transmission power of the base station having insufficient bandwidth to the transmission power of the adjacent base station and causes a mobile station to switch from the bandwidth shortage base station to the adjacent base station through a handover process.

The transfer controller 110 increases among adjacent base stations, the transmission power of an adjacent base station that has bandwidth available for each wireless connection included in a transfer path for traffic transmitted/received by the base station to/from a mobile station, the available bandwidth being greater than or equal to a threshold. The transfer controller 110 does not increase the transmission power of adjacent base stations having available bandwidth less than the threshold. Thus, a mobile station that is connected to a base station having insufficient bandwidth is prevented from switching, through a handover process, to an adjacent base station having little available bandwidth, whereby drops in throughput can be prevented.

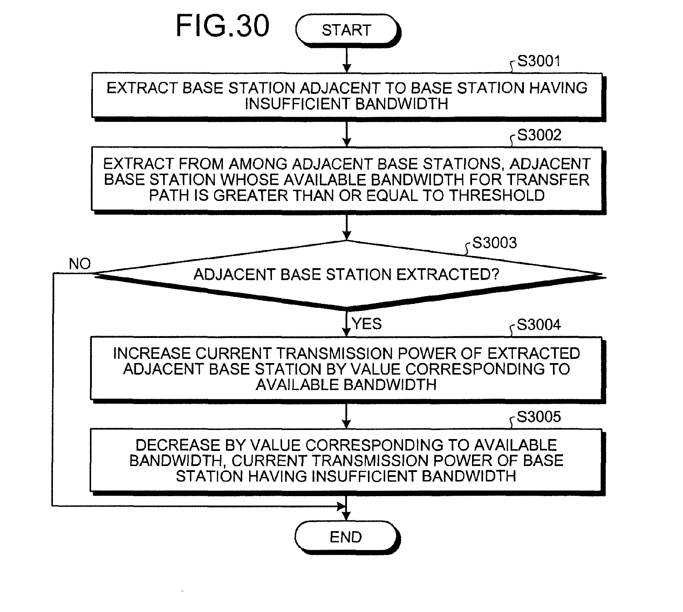

FIG. 30 is a flowchart of an example 2 of the process of determining the transmission power of the base station. The transfer controller 110 executes, for example, the steps in FIG. 30 at step S2306 in FIG. 23. Operations at steps S3001 to S3005 in FIG. 30 are identical to those at steps S2901 to S2905 in FIG. 29, except that at step S3004, the transfer controller 110 increases the transmission power of the extracted adjacent base station by a value corresponding to the available bandwidth of the extracted adjacent base station. For example, the transfer controller 110 increases the transmission power of the extracted adjacent base station in proportion to the size of the available bandwidth of the extracted adjacent base station.

For example, in the example of FIG. 25, the current transmission power of the base stations 212 and 214 is 50 [dBm] and the available bandwidth for the base stations 212 and 214 are 5 [Mbps] and 10 [Mbps], respectively. It is assumed that a transmission power increment ranges from 0 to 15 [dBm] and that a transmission power increment of 1.5 [dBm] results for available bandwidth of 1 [Mbps]. In this case, the transmission power of the base station 212 is incremented by 1.5x5=7.5 [dBm] and the transmission power of the base station 214 is incremented by 1.5x10=15 [dBm]. As a result, the extent of expansion of the coverage area of the base station 214 is larger than that of the base station 212.

At step S3005, the transfer controller 110 decreases by a value corresponding to the available bandwidth of the extracted adjacent base station, the transmission power of the base station having insufficient bandwidth. For example, the transfer controller 110 decreases the transmission power of the base station in proportional to the size of the available bandwidth of the extracted adjacent base station.

It is assumed, for example, that a transmission power decrement ranges from 0 to -10 [dBm] and that a transmission power decrement of -1 [dBm] results for an unused bandwidth of 1 [Mbps]. The transfer controller 110 sets a decrement of the transmission power of the base station 213 to -1×10=-10 [dBm], based on the available 10[Mbps] of bandwidth at the base station 214 having a large transmission power increment among adjacent base stations whose transmission power is increased at step S3004.

The transfer controller 110 may set a decrement of the transmission power of the base station 213 to -1×15=-15 [dBm], based on the total available bandwidth of 15 [Mbps] of the base stations 212 and 214. In another case, the transfer controller 110 may set a decrement of the transmission power of the base station 213 to -1×7.5=-7.5 [dBm], based on an average of for the available bandwidth of 7.5 [Mbps] of the base stations 212 and 214.

The transfer controller 110 increases the transmission power of an adjacent base station by a value corresponding to bandwidth available for each wireless connection included in a transfer path for traffic transmitted/received by the adjacent base station to/from a mobile station, thereby increasing a possibility that a mobile station connected to a base station short of bandwidth switches, through a handover process, to an adjacent base station having a large amount of available bandwidth. As a result, the mobile station connected to the base station that is short of bandwidth is prevented from switching to an adjacent base station having a small amount of available bandwidth, which prevents the adjacent base station from becoming short of bandwidth. Hence, throughput can be improved.

The transfer controller 110 decreases by a value corresponding to the bandwidth available for each wireless connection included in a transfer path for traffic transmitted/received by an adjacent base station to/from a mobile station, the transmission power of a base station short on bandwidth. Thus, the excessive number of mobile stations connected to the base station short on bandwidth are prevented from switching to the adjacent base station through a handover process and the adjacent base station is prevented from becoming short of bandwidth. Hence, throughput can be improved.

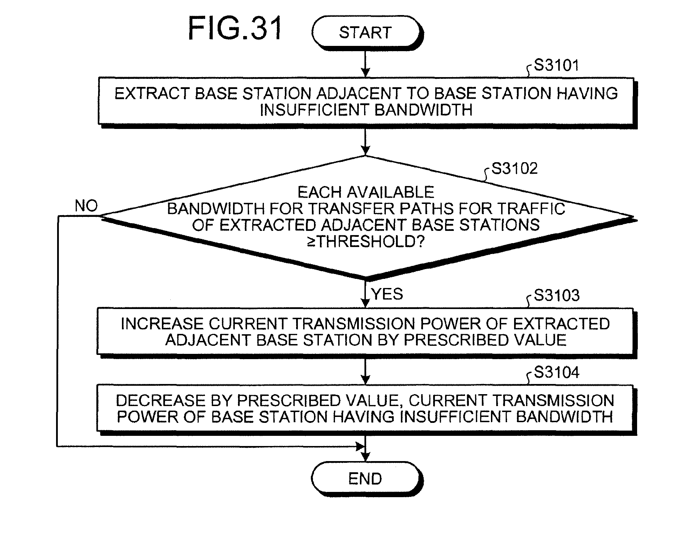

FIG. 31 is a flowchart of an example 3 of the process of determining the transmission power of the base station. The transfer controller 110 executes, for example, the steps in FIG. 31 at step S2306 in FIG. 23. The transfer controller 110 first extracts among the base stations 211 to 214, an adjacent base station adjacent to a base station having insufficient bandwidth (step S3101). Extraction of the adjacent base station at step S3101 is the same as the extraction of the adjacent base station in FIG. 29.

The transfer controller 110 then determines if each available bandwidth for transfer paths for traffic of adjacent base stations extracted at step S3101 is greater than or equal to a threshold (step S3102). If at least any one of the available bandwidths for the transfer paths for traffic of the extracted adjacent base stations is not greater than or equal to the threshold (step S3102: NO), the series of operations is ended. In this case, the transfer controller 110 does not change the transmission power of each base station.

At step S3102, if each available bandwidth for the transfer paths for traffic of the extracted adjacent base stations is greater than or equal to the threshold (step S3102: YES), the transfer controller 110 proceeds to step S3103. Operations at steps S3103 and S3104 in FIG. 31 are identical to those at steps S2904 and S2905 in FIG. 29 and description therefor is omitted.

In the example of FIG. 26, for example, the available bandwidth for the transfer path for traffic at the bases station 212 is 5 [Mbps], and the available bandwidth for the transfer path for traffic at the bases station 214 is 10 [Mbps]. When the threshold is set to 5 [Mbps], therefore, each available bandwidth for the transfer paths for traffic of the adjacent base stations is determined to greater than or equal to the threshold. When the threshold is set to 10 [Mbps], at least any one of the available bandwidths for the transfer paths for traffic at the adjacent base stations is determined to be greater than or equal to the threshold.

In this manner, for each adjacent base station, when available bandwidth for each wireless connection included in a transfer path for traffic transmitted/received by the adjacent base station to/from a mobile station is greater than or equal to the threshold, the transfer controller 110 controls the transmission power of the base station. For at least any one of adjacent base stations, when the available bandwidth for each wireless connection included in a transfer path for traffic transmitted/received by the adjacent base station to/from a mobile station is smaller than the threshold, the transfer controller 110 does not control the transmission power of each base station.

Thus, a case can be avoided where when an adjacent base station having a small amount of available bandwidth is present, a mobile station switches from a base station short on bandwidth to the adjacent base station having a small amount of available bandwidth. Consequently, the adjacent base station can be prevented from becoming short of bandwidth and throughput can be improved.

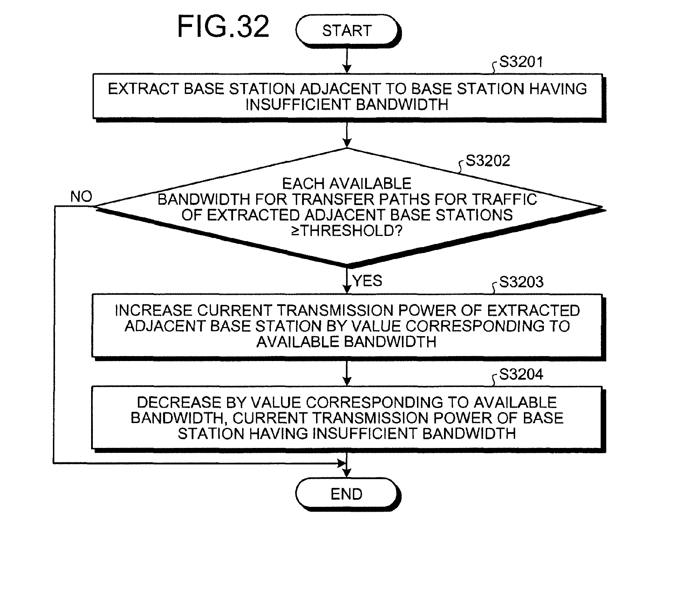

FIG. 32 is a flowchart of an example 4 of the process of determining the transmission power of the base station. The transfer controller 110 executes, for example, the steps in FIG. 32 at step S2306 in FIG. 23. Operations at the steps in FIG. 32 are a combination of the operations at the steps depicted in FIG. 30 and in FIG. 31. Operations at steps S3201 to S3204 in FIG. 32 are identical to those at steps S3101 to S3104 in FIG. 31.

However, at step S3203, the transfer controller 110 increases the transmission power of an extracted adjacent base station by a value corresponding to the available bandwidth of the extracted adjacent base station (in the same manner as at step S3004). At step S3204, the transfer controller 110 decreases by a value corresponding to an unused bandwidth for the extracted adjacent base station (in the same manner as at step S3005), the transmission power of a base station short on bandwidth.

In this manner, according to the transfer controller 110 of the second embodiment, the volume of traffic at each base station can be changed by controlling the transmission power of the base station based on the bandwidth and the traffic volume at each wireless connection. Hence, even if the bandwidth for each wireless connection changes due to an environmental change, a drop in throughput of traffic is suppressed, improving the reliability of the network. Even if respective wireless transfer paths for a given base station (e.g., base station 213) deteriorate simultaneously, a drop in throughput can be suppressed by transferring traffic at the base station 213 to a different base station.

### (Configuration Example of Wireless Communication Device and Transfer Controller)

A specific configuration example of the wireless communication devices 101 to 103 and the transfer controller 110 in the above embodiments will be described.

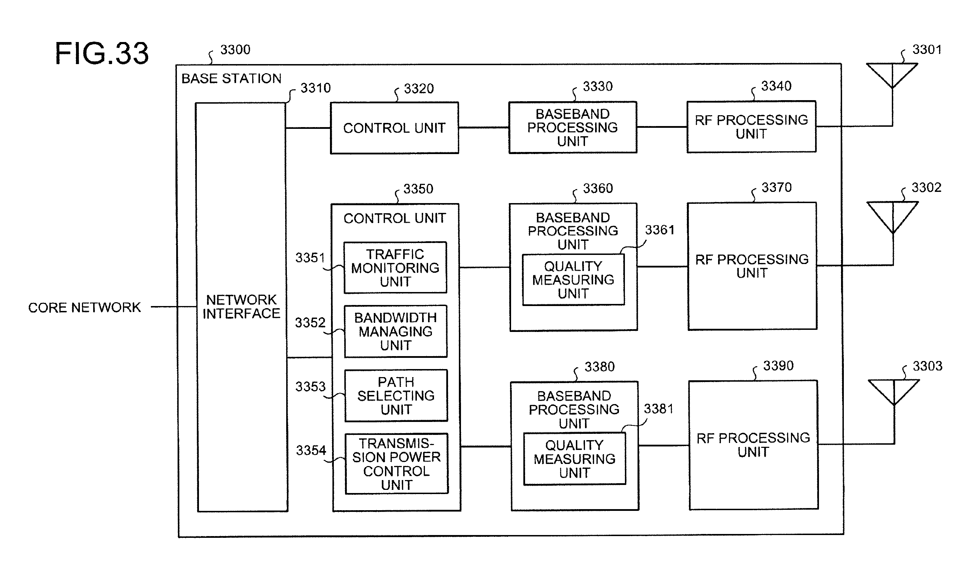

FIG. 33 depicts a configuration example 1 of the wireless communication device and the transfer controller. A base station 3300 depicted in FIG. 33 has functions of a base station and a wireless backhaul communication device. The base station 3300 includes antennas 3301 to 3303, a network interface 3310, control units 3320 and 3350, baseband processing units 3330, 3360, and 3380, and RF processing units 3340, 3370, and 3390. The base station 3300 can be applied to, for example, the base station 211 of the network 200 depicted in FIG. 2.

The antenna 3301 serves as an interface for wireless communication with a mobile station connected to the base station 3300. The antennas 3302 and 3303 serve as interfaces for performing wireless communication with each base station that performs wireless backhaul communication with the base station 3300. In the description of FIG. 33, each base station (the base station 212 and the base station 214 in the example of FIG. 2) that performs wireless backhaul communication with the base station 3300 is referred to as first adjacent base station and second adjacent base station, respectively.

The network interface 3310 is an interface connected to the core network 201 via, for example, a wired line. The network interface 3310 is connected also to the control unit 3320 and the control unit 3350.

The control unit 3320 executes a process of configuring the base station 3300 (e.g., transmission power setting), signaling to a gateway device in the core network 201, and generating broadcast information to be broadcast in a coverage area. The control unit 3320 outputs to the baseband processing unit 3330, DL data output from the network interface 3310 and addressed to a mobile station. The control unit 3320 outputs to the network interface 3310, UL data output from the baseband processing unit 3330.

The baseband processing unit 3330 executes a baseband process on DL data output from the control unit 3320, such as encoding, modulation, and generation of transmission wireless frames. The baseband processing unit 3330 outputs to the RF processing unit 3340, the DL data subjected to the baseband process. The baseband processing unit 3330 also executes a baseband process on UL data output from the RF processing unit 3340, such as decoding reception wireless frames, decoding, and demodulation. The baseband processing unit 3330 outputs to the control unit 3320, the UL data subjected to the baseband process.

The RF processing unit 3340 performs up-convert on DL data output from the baseband processing unit 3330 to convert a baseband signal into an RF signal. The RF processing unit 3340 outputs to the antenna 3301, the DL data subjected to the up-convert. The RF processing unit 3340 performs down-convert on UL data output from the antenna 3301 to convert an RF signal into a baseband signal. The RF processing unit 3340 outputs to the baseband processing unit 3330, the UL data subjected to the down-convert.

The antenna 3301 transmits to a mobile station connected to the base station 3300 through a wireless link, DL data output from the RF processing unit 3340. The antenna 3301 receives UL data transmitted from a mobile station connected to the base station 3300 through a wireless link and outputs the received UL data to the RF processing unit 3340.

The control unit 3350 outputs to the baseband processing unit 3360 or the RF processing unit 3370 according to transfer through a set transfer path, data output from the network interface 3310 and addressed to a mobile station connected to a different base station. The control unit 3350 outputs to the network interface 3310, data output from the baseband processing unit 3360 or the RF processing unit 3370.

The baseband processing unit 3360 executes a baseband process on data output from the control unit 3350, such as encoding, modulation, and generating transmission wireless frames. The baseband processing unit 3360 outputs to the RF processing unit 3370, the data subjected to the baseband process. The baseband processing unit 3360 also executes a baseband process on data output from the RF processing unit 3370, such as decoding reception wireless frames, decoding, and demodulation. The baseband processing unit 3360 outputs the data subjected to the baseband process to the control unit 3350.

The RF processing unit 3370 performs up-convert on data output from the baseband processing unit 3360 to convert a baseband signal into an RF signal. The RF processing unit 3370 outputs to the antenna 3302, the data subjected to the up-convert. The RF processing unit 3370 performs down-convert on data output from the antenna 3302 to convert an RF signal into a baseband signal. The RF processing unit 3370 outputs to the baseband processing unit 3360, the data subjected to the down-convert.

The antenna 3302 transmits to the first adjacent base station through a wireless link, data output from the RF processing unit 3370. The antenna 3302 receives data transmitted from the first adjacent base station through a wireless link, and outputs the received data to the RF processing unit 3370.

The baseband processing unit 3380 executes a baseband process on data output from the control unit 3350, such as encoding, modulation, and generating transmission wireless frames. The baseband processing unit 3380 outputs to the RF processing unit 3390, the data subjected to the baseband process. The baseband processing unit 3380 also executes a baseband process on data output from the RF processing unit 3390, such as decoding reception wireless frames, decoding, and demodulation. The baseband processing unit 3380 outputs to the control unit 3350, the data subjected to the baseband process.

The RF processing unit 3390 performs up-convert on data output from the baseband processing unit 3380 to convert a baseband signal into an RF signal. The RF processing unit 3390 outputs to the antenna 3303, the data subjected to the up-convert. The RF processing unit 3390 performs down-convert on data output from the antenna 3303 to convert an RF signal into a baseband signal. The RF processing unit 3390 outputs to the baseband processing unit 3380, the data subjected to the down-convert.

The antenna 3303 transmits to the second adjacent base station through a wireless link, data output from the RF processing unit 3390. The antenna 3303 receives data transmitted from the second adjacent base station through a wireless link, and outputs the received data to the RF processing unit 3390.

DL data addressed to a mobile station connected to the base station 3300 is received by the network interface 3310 through the core network 201 and is transmitted out from the antenna 3301. UL data transmitted from a mobile station connected to the base station 3300 is received by the antenna 3301, and is transmitted from the network interface 3310 to the core network 201.

Data transmitted from the first adjacent base station is received by the antenna 3302, and is transmitted from the network interface 3310 to the core network 201. Data transmitted from the second adjacent base station is received by the antenna 3303, and is transmitted from the network interface 3310 to the core network 201. Data transmitted from the core network 201 and addressed to a mobile station connected to a different base station is sent to the control unit 3350, and is transmitted to the first base station or the second base station through control by the control unit 3350.

The control unit 3350 has a traffic monitoring unit 3351, a bandwidth managing unit 3352, a path selecting unit 3353, and a transmission power control unit 3354. The traffic monitoring unit 3351 corresponds to the transfer volume acquiring unit 112 in FIG. 1B. Each stream of traffic transferred through the network 200 passes through the control unit 3350 of the base station 3300 corresponding to the base station 211. Hence, the traffic monitoring unit 3351 can acquire the volume of each stream of traffic transferred through the network 200 by monitoring each stream of traffic passing through the control unit 3350.

The bandwidth managing unit 3352 corresponds to the bandwidth acquiring unit 111 in FIG. 1B. The bandwidth managing unit 3352 can acquire the bandwidth for a wireless connection between the base station 3300 and the first adjacent base station from, for example, a quality measuring unit 3361. The bandwidth managing unit 3352 can acquire the bandwidth for a wireless connection between the base station 3300 and the second adjacent base station from, for example, a quality measuring unit 3381. The bandwidth managing unit 3352 acquires from among data passing through the control unit 3350, bandwidth information transmitted from a different base station and thereby, acquires the bandwidth for each wireless connection in the network 200.

The path selecting unit 3353 corresponds to the control unit 113 in FIG. 1B. The path selecting unit 3353 selects a transfer path for each stream of traffic, based on the volume of each stream of traffic and the bandwidth for each wireless connection, acquired by the traffic monitoring unit 3351 and the bandwidth managing unit 3352. The path selecting unit 3353 sets in the control unit 3350, a selected transfer path. The path selecting unit 3353 outputs to the baseband processing unit 3360 or the baseband processing unit 3380, path information indicative of the selected transfer path and thereby, gives notification of the transfer path to a different base station.

The transmission power control unit 3354 corresponds to the control unit 113 in FIG. 1B. The transmission power control unit 3354 determines the transmission power of each base station, based on the volume of each stream of traffic and the bandwidth for each wireless connection, acquired by the traffic monitoring unit 3351 and the bandwidth managing unit 3352. The transmission power control unit 3354 sets in the RF processing unit 3340, the determined transmission power. The transmission power control unit 3354 outputs power information indicative of the determined transmission power to the baseband processing unit 3360 or the baseband processing unit 3380 and thereby, gives notification of the transmission power to a different base station.

The baseband processing unit 3360 has the quality measuring unit 3361. The quality measuring unit 3361 measures the wireless communication quality of a wireless connection between the base station 3300 and the first adjacent base station, based on a wireless signal received via the RF processing unit 3370. The baseband processing unit 3360 outputs to the bandwidth managing unit 3352, bandwidth calculated based on the measured wireless communication quality.

The baseband processing unit 3380 has the quality measuring unit 3381. The quality measuring unit 3381 measures the wireless communication quality of a wireless connection between the base station 3300 and the second adjacent base station, based on a wireless signal received via the RF processing unit 3390. The baseband processing unit 3380 outputs to the bandwidth managing unit 3352, bandwidth calculated based on the measured wireless communication quality.

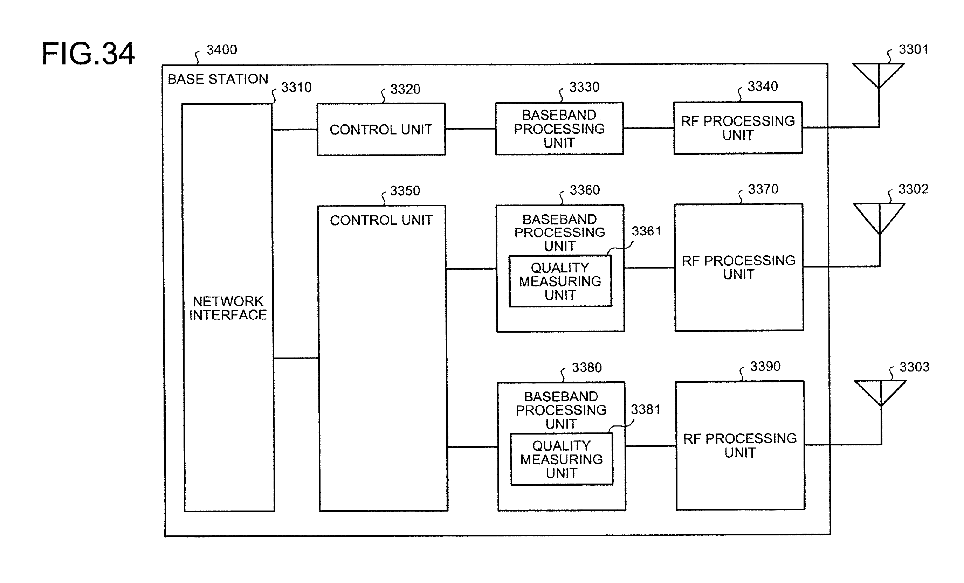

FIG. 34 depicts a configuration example 2 of the wireless communication device and the transfer controller. A base station 3400 depicted in FIG. 34 can be applied to, for example, the base stations 212 to 214 of the network 200 of FIG. 2. In FIG. 34, components identical to those described in FIG. 33 are denoted by the same reference numerals used in FIG. 33 and description thereof is omitted. In the description of FIG. 34, each base station (the base station 211 and the base station 213 when the base station 3400 is applied to the base station 212) that performs wireless backhaul communication with the base station 3400 is referred to as first adjacent base station and second adjacent base station.

In the base station 3400, configuration may be such that the network interface 3310 is not connected to the core network 201. Further, configuration may be such that the control unit 3350 of the base station 3400 does not include the traffic monitoring unit 3351, bandwidth managing unit 3352, path selecting unit 3353, and transmission power control unit 3354.

DL data addressed to a mobile station connected to the base station 3400 is received by the antenna 3302 or the antenna 3303 and is sent to the network interface 3310. The network interface 3310 outputs the incoming DL data to the control unit 3320, which causes the antenna 3301 to transmit the DL data.

UL data transmitted from a mobile station connected to the base station 3400 is received by the antenna 3301 and is sent through the network interface 3310 to the control unit 3350. The control unit 3350 outputs the incoming UL data to the baseband processing unit 3360 or the baseband processing unit 3380 according to a set transfer path so that the UL data is transmitted to the first adjacent base station or the second adjacent base station.

Data addressed to a different base station and transmitted from the first base station is received by the antenna 3302 and is sent to the control unit 3350. The control unit 3350 outputs the incoming data from the first adjacent base station to the baseband processing unit 3380 so that the data is transmitted to the second adjacent base station. Data addressed to a different base station and transmitted from the second base station is received by the antenna 3303 and is sent to the control unit 3350. The control unit 3350 outputs to the baseband processing unit 3360, the incoming data from the second adjacent base station so that the data is transmitted to the first adjacent base station.

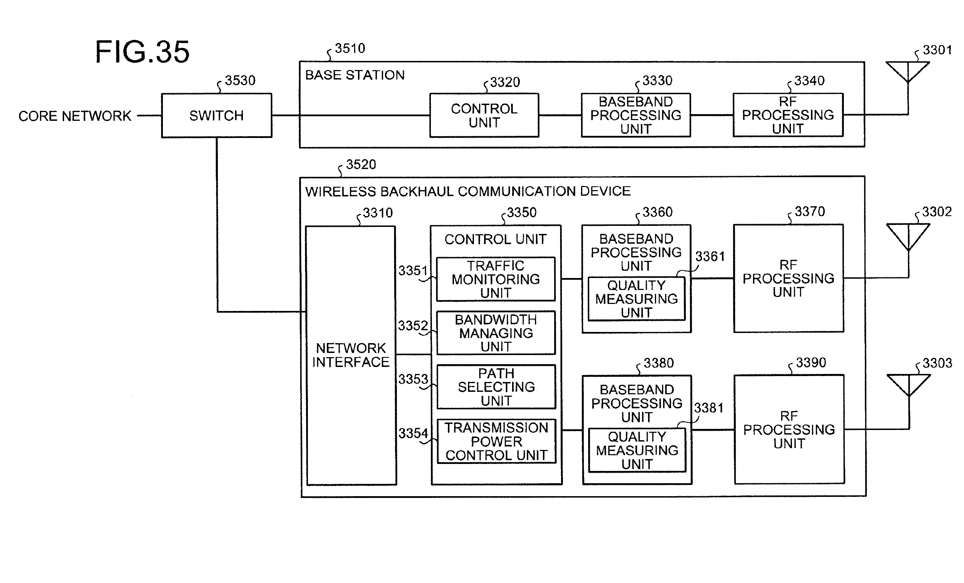

FIG. 35 depicts a configuration example 3 of the wireless communication device and the transfer controller. In FIG. 35, components identical to those described in FIG. 33 are denoted by the same reference numerals used in FIG. 33 and description thereof is omitted. A base station 3510, a wireless backhaul communication device 3520, and a switch 3530 in FIG. 35 can be applied to, for example, the base station 211 of the network 200 depicted in FIG. 2.

The base station 3510 and the wireless backhaul communication device 3520 have configurations obtained by dividing the configuration of the base station 3300 of FIG. 33. For example, the base station 3510 has the antenna 3301, the control unit 3320, the baseband processing unit 3330, and the RF processing unit 3340. The wireless backhaul communication device 3520 has the antennas 3302 and 3303, the network interface 3310, the control unit 3350, the baseband processing units 3360 and 3380, and the RF processing units 3370 and 3390.

The switch 3530 is a switch that terminates a wired line for connection to the core network 201. The switch 3530 is connected to the base station 3510 and to the wireless backhaul communication device 3520. Communication between the network interface 3310 and the core network 201 is performed through the switch 3530. Communication between the control unit 3320 and the wireless backhaul communication device 3520 is performed also through the switch 3530.

Data transmitted from the core network 201 and addressed to a mobile station connected to the base station 3510 is routed by the switch 3530 to the base station 3510. Data transmitted from the core network 201 and addressed to a mobile station connected to a base station different from the base station 3510 is routed by the switch 3530 to the wireless backhaul communication device 3520.

In the network 200 depicted in FIG. 2, when a relay station is provided in place of any one of the base stations 211 to 214, the wireless backhaul communication device 3520 can be used as the relay station. Because the relay station does not communicate with a mobile station, the relay station may have a configuration omitting the antenna 3301, the control unit 3320, the baseband processing unit 3330, the RF processing unit 3340, and the switch 3530.

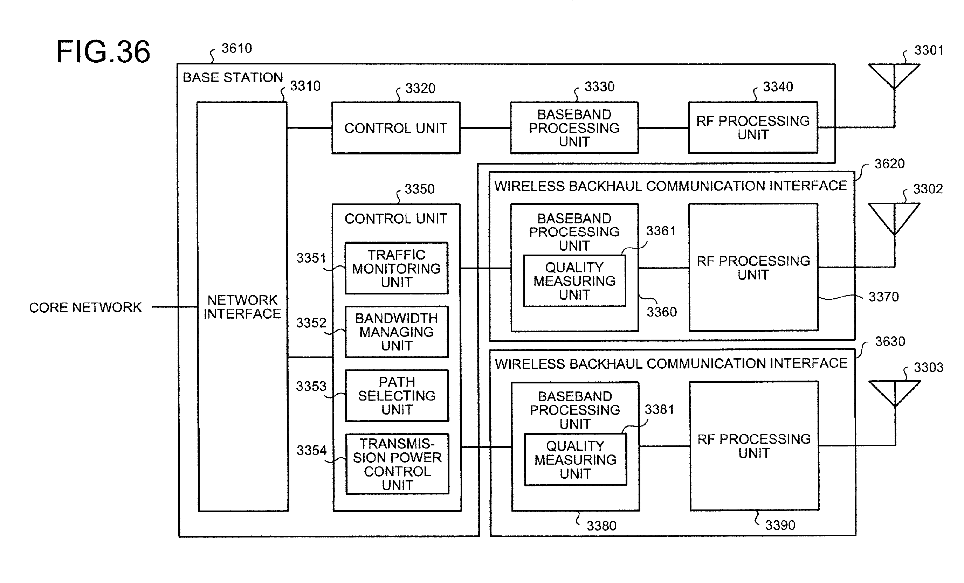

FIG. 36 depicts a configuration example 4 of the wireless communication device and the transfer controller. In FIG. 36, components identical to those described in FIG. 33 are denoted by the same reference numerals used in FIG. 33 and description thereof is omitted. A base station 3610 and wireless backhaul communication interfaces 3620 and 3630 depicted in FIG. 36 can be applied to, for example, the base station 211 of the network 200 of FIG. 2.

The base station 3610 and the wireless backhaul communication devices 3620 and 3630 have configurations obtained by dividing the configuration of the base station 3300 of FIG. 33. For example, the base station 3610 has the antenna 3301, the network interface 3310, the control units 3320 and 3350, the baseband processing unit 3330, and the RF processing unit 3340.

The wireless backhaul communication device 3620 has the antennas 3302, the baseband processing unit 3360, and the RF processing units 3370. The wireless backhaul communication device 3630 has the antennas 3303, the baseband processing unit 3380, and the RF processing units 3390. Such configuration enables, for example, replacement or upgrading of only the wireless backhaul communication devices 3620 and 3630.

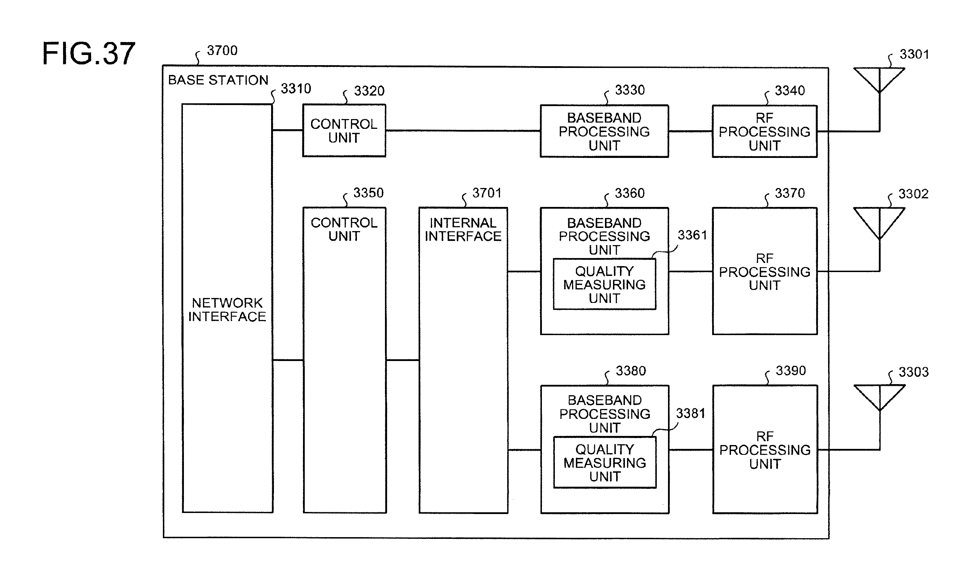

FIG. 37 depicts a configuration example 5 of the wireless communication device and the transfer controller. In FIG. 37, components identical to those described in FIG. 34 are denoted by the same reference numerals used in FIG. 34 and description thereof is omitted. A base station 3700 depicted in FIG. 37 can be applied to, for example, the base stations 212 to 214 of the network 200 of FIG. 2. The base station 3700 has an internal interface 3701, in addition to the components of the base station 3400 depicted in FIG. 34. The internal interface 3701 is disposed between the control unit 3350 and the baseband processing units 3360 and 3380.

Data transmitted from the first adjacent base station and addressed to a different base station is received by the antenna 3302 and is sent to the internal interface 3701. The internal interface 3701 outputs the incoming data from the first adjacent base station to the baseband processing unit 3380 so that the data is transmitted to the second adjacent base station. Data transmitted from the second adjacent base station and addressed to a different base station is received by the antenna 3303 and is sent to the internal interface 3701. The internal interface 3701 outputs the incoming data from the second adjacent base station to the baseband processing unit 3360 so that the data is transmitted to the first adjacent base station.

The configuration examples depicted in FIGs. 33 to 37 may be combined together. For example, the base station 3510, the wireless backhaul communication device 3520, and the switch 3530 in FIG. 35 can be applied to the base stations 212 to 214 of the network 200 depicted in FIG. 2. In this case, configuration may be such that the network interface 3310 of the wireless backhaul communication device 3520 is not connected to the core network 201. Configuration may be such that the control unit 3350 of the wireless backhaul communication device 3520 does not include the traffic monitoring unit 3351, the bandwidth managing unit 3352, the path selecting unit 3353, and the transmission power control unit 3354.

### (Example of Transfer Path Selecting Process)

An example of a transfer path selecting process by the transfer controller 110 of the above embodiments will be described.

FIG. 38 is a flowchart of an example 1 of a transfer path selecting process. The transfer controller 110 executes, for example, operations at the steps in FIG. 38 at step S604 in FIG. 6 or at step S2305 in FIG. 23. The transfer controller 110 first extracts each candidate for a transfer path for each stream of traffic, based on topology information of the network 200 (step S3801). The transfer controller 110 then calculates for each transfer path candidate extracted at step S3801, the traffic transfer volume at each wireless connection (step S3802).

The transfer controller 110 then extracts a candidate for a transfer path along which the traffic transfer volume is less than or equal to a threshold at each wireless connection, based on the traffic transfer volume at each wireless connection calculated for each transfer path candidate at step S3802 (step S3803). The transfer controller 110 selects a transfer path from among transfer path candidates extracted at step S3803 (step S3804), and ends the series of operations.

When multiple transfer path candidates are extracted at step S3803, the transfer controller 110 selects a transfer path from among the transfer path candidates according to a prescribed condition. For example, the transfer path controller 110 selects a transfer path whose minimum available bandwidth for wireless connections is greatest among the minimum available bandwidth of the transfer path candidates. As a result, the available bandwidth for wireless connections can be uniformed.

FIG. 39 is a flowchart of an example 2 of the transfer path selecting process. The transfer controller 110 executes, for example, operations at the steps in FIG. 39 at step S604 in FIG. 6 or at step S2305 in FIG. 23. Operations at steps S3901 and S3902 in FIG. 39 are identical to those at steps S3801 and S3802 in FIG. 38 and description therefor is omitted.

Following step S3902, the transfer controller 110 sums for each transfer path candidate, the traffic transfer volumes at respective the wireless connections, based on the traffic transfer volume at each wireless connection for each transfer path candidate calculated at step S3802. The transfer controller 110 then selects a transfer path candidate having the greatest total traffic transfer volume, as a transfer path (step S3903), and ends the series of operations. As a result, a transfer path that maximizes the volume of traffic transferred through the network 200 can be selected.

As described, according to the disclosed technique, the reliability of the network can be improved. For example, according to the disclosed technique, a drop in throughput can be suppressed when a wireless connection breaks due to a failure of a wireless communication device or when the bandwidth for the wireless connection drops dynamically or bandwidths for multiple wireless connections drop simultaneously due to environmental factors, such as bad weather.

While the base stations 211 to 214 have been described as a specific example of the multiple wireless communication devices depicted in FIG. 1A, the multiple wireless communication devices may include a wireless communication device other than the base station. A wireless communication device other than the base station is, for example, a relay device that transfers to an adjacent wireless communication device, traffic transferred to the relay device from another adjacent wireless communication device.

While the case of applying the network 100 depicted in FIG. 1A to a mobile backhaul system has been described, the network 100 is not limited to the mobile backhaul system and may be a network created by interconnecting multiple wireless communication devices through wireless connections.

### EXPLANATIONS OF LETTERS OR NUMERALS

network 100, 200
core network 201
base stations 211 to 214, 3300, 3400, 3510, 3610, 3700
cells 221 to 224
antenna 3301 to 3303
downlink traffic d2 to d4
uplink traffic u2 to u4

## Claims

1. A transfer controller in a network built by interconnecting a plurality of wireless communication devices through wireless connections, the transfer controller comprising:
a bandwidth acquiring unit that acquires bandwidth information indicating bandwidth for each of the wireless connections;
a transfer volume acquiring unit that acquires the volume of traffic transferred through the network; and
a control unit that controls transfer paths for the traffic, based on the bandwidth for each of the wireless connections and the volume of traffic transferred through the network.

2. The transfer controller according to claim 1, wherein
the network transfers multiple streams of the traffic differing in at least sender or recipient,
the transfer volume acquiring unit acquires the volume of each stream of traffic, and
the control unit controls the transfer paths for the streams of traffic.

3. The transfer controller according to claim 1, wherein
the control unit controls the transfer paths to provide a transfer path along which the bandwidth for each of the wireless connections and the volume of traffic transferred at each of the wireless connections meet a prescribed condition.

4. The transfer controller according to claim 3, wherein
the prescribed condition is a condition that the volume of traffic transferred is less than or equal to the bandwidth at each of the wireless connections.

5. The transfer controller according to claim 1, wherein
the wireless communication devices include a base station that transfers through the network, traffic transmitted to and/or received from a mobile station.

6. The transfer controller according to claim 5, wherein
the control unit controls based on the bandwidth and the volume of traffic, transmission power for transmission from the base station to the mobile station.

7. The transfer controller according to claim 6, wherein
the control unit controls the transmission power when no transfer path along which the bandwidth for each of the wireless connections and the volume of traffic transferred at each of the wireless connections meet a prescribed condition is present.

8. The transfer controller according to claim 7, wherein
the control unit decreases the transmission power of a base station that is among the base stations, is short of bandwidth, and cannot transfer through the network based on a prescribed condition, traffic transmitted to and/or received from the mobile station.

9. The transfer controller according to claim 7, wherein
the wireless communication devices include a plurality of base stations, and
the control unit identifies a base station that is among the base stations, is short of bandwidth, and cannot transfer through the network based on the prescribed condition, traffic transmitted to and/or received from the mobile station, and further identifies adjacent base stations among the base stations and adjacent to the base station short of bandwidth, and the control unit lowers a ratio of transmission power of the base station short of bandwidth to transmission power of the adjacent base stations.

10. The transfer controller according to claim 9, wherein
the control unit identifies among the adjacent base stations, an adjacent base station having greater than or equal to a threshold, available bandwidth for a wireless connection included in a transfer path for traffic that the adjacent base station transmits to and/or receives from the mobile station, and the control unit increases the transmission power of the identified adjacent base station.

11. The transfer controller according to claim 9, wherein
the control unit increases the transmission power of an adjacent base station by an amount corresponding to available bandwidth for a wireless connection included in a transfer path for traffic that the adjacent base station transmits to and/or receives from the mobile station.

12. The transfer controller according to claim 9, wherein
the control unit decreases the transmission power of the adjacent base station by an amount corresponding to available bandwidth for a wireless connection included in a transfer path for traffic that the adjacent base station transmits to and/or receives from the mobile station.

13. The transfer controller according to claim 9, wherein
the control unit controls the transmission power when for all the adjacent base stations, available bandwidth for a wireless connection included in a transfer path for traffic the adjacent base station transmits/receives to/from a mobile station is greater than or equal to a threshold.

14. The transfer controller according to claim 2, wherein
the wireless communication devices include a prescribed communication device that allows the streams of the traffic to pass and that measures the volume of each of the streams of the traffic passing through the prescribed communication device, and
the transfer volume acquiring unit acquires the volume of each of the streams of the traffic from the prescribed communication device.

15. The transfer controller according to claim 14, wherein
the transfer controller is incorporated in the prescribed communication device.

16. The transfer controller according to claim 1, wherein
the bandwidth acquiring unit acquires bandwidth measurements from the wireless communication devices.

17. The transfer controller according to claim 5, wherein
the network is a backhaul network that transfers traffic transmitted and/or received between the base station and a core network.

18. The transfer controller according to claim 5, wherein
the transfer volume acquiring unit acquires the volume of uplink traffic transmitted from the mobile station to the base station and the volume of downlink traffic transmitted from the base station to the mobile station,
and
the control unit controls a transfer path for the uplink traffic and a transfer path for the downlink traffic.

19. A communication system comprising:
a network built by interconnecting a plurality of wireless communication devices through wireless connections; and
a transfer controller that controls transfer paths for traffic, based on bandwidth for each of the wireless connections and the volume of the traffic transferred through the network.

20. The communication system according to claim 19, wherein
the wireless communication devices measure wireless communication quality of each of the wireless connections and based on the measured wireless communication quality, calculate bandwidth for each of the wireless connections, and
the transfer controller controls the transfer paths, based on the bandwidth calculated by the wireless communication devices.

21. The communication system according to claim 19, wherein
among the wireless communication devices, each wireless communication device forming a wireless connection through which traffic is transferred bidirectionally transfers the traffic bidirectionally by time division multiplexing or frequency division multiplexing.

22. A transfer control method for a network built by interconnecting a plurality of wireless communication devices through wireless connections, the method comprising:
acquiring bandwidth information indicating bandwidth for each of the wireless connections;
acquiring the volume of traffic transferred through the network; and
controlling transfer paths for the traffic, based on the acquired bandwidth information and the acquired volume of the traffic.
